# EUROPEAN PATENT SPECIFICATION

(11) **EP 3 555 736 B1**
(45) Date of publication and mention of the grant of the patent: **26.06.2024**
(21) Application number: 17816794.6
(22) Date of filing: 14.12.2017
(51) Int. Cl.: G06F 3/0488

(54) **SYSTEM AND METHOD FOR MANAGEMENT OF HANDWRITTEN DIAGRAM CONNECTORS**
SYSTEM UND VERFAHREN ZUR VERWALTUNG VON HANDGEZEICHNETEN DIAGRAMMANSCHLÜSSEN
SYSTÈME ET PROCÉDÉ DE GESTION DE CONNECTEURS DE DIAGRAMME DESSINÉ À LA MAIN

(30) Priority: 15.12.2016 EP 16290237; 22.03.2017 US 201715465946
(43) Date of publication of application: 23.10.2019
(73) Proprietor: MyScript, 44339 Nantes Cedex 3 (FR)
(72) Inventor: MÉLINAND, Robin, 44339 Nantes Cedex 3 (FR)
(74) Representative: Müller-Boré & Partner Patentanwälte PartG mbB
(86) International application number: PCT/EP2017/082816
(87) International publication number: WO 2018/109084

(56) References cited:
- EP-A2- 0 825 558
- US-B2- 7 394 935

## Description

### CROSS-REFERENCE TO RELATED APPLICATIONS

This application claims priority to U.S. Patent Application No. 15/465,946, filed March 22, 2017, which claims priority to European Patent Application No. 16 290 237.3, filed December 15,2016.

### TECHNICAL FIELD

The present disclosure relates generally to the field of computing device interfaces capable of recognizing user input handwriting of various shapes and characters. In particular, the present disclosure provides systems and methods for handling editing operations effecting display of connectors between input handwritten diagram elements.

### BACKGROUND

Computing devices continue to become more ubiquitous to daily life. They take the form of computer desktops, laptop computers, tablet computers, e-book readers, mobile phones, smartphones, wearable computers, global positioning system (GPS) units, enterprise digital assistants (EDAs), personal digital assistants (PDAs), game consoles, and the like. Further, computing devices are being incorporated into vehicles and equipment, such as cars, trucks, farm equipment, manufacturing equipment, building environment control (e.g., lighting, HVAC), and home and commercial appliances.

Computing devices generally consist of at least one processing element, such as a central processing unit (CPU), some form of memory, and input and output devices. The variety of computing devices and their subsequent uses necessitate a variety of interfaces and input devices. One such input device is a touch sensitive surface such as a touch screen or touch pad wherein user input is received through contact between the user's finger or an instrument such as a pen or stylus and the touch sensitive surface. Another input device is an input surface that senses gestures made by a user above the input surface. A further input device is a position detection system which detects the relative position of either touch or non-touch interactions with a non-touch surface. Any of these methods of input can be used generally for the handwritten or hand-drawn input of drawings and text which input is interpreted using a handwriting recognition system or method.

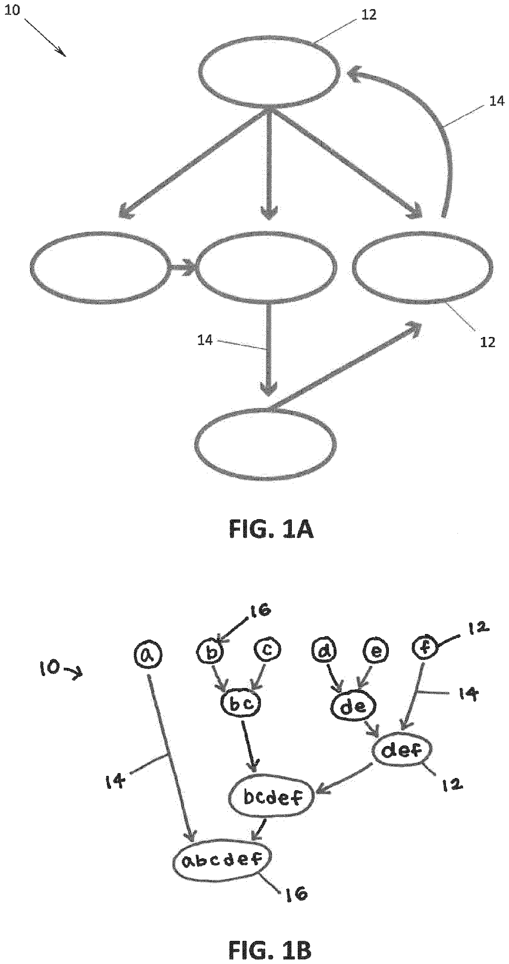

One application of handwriting recognition in computing devices is in the creation of diagrams which are hand-drawn on a computing device to be converted into typeset versions. Diagrams are drawings that explain or show arrangement and relations (as of parts). Diagrams generally include shapes having arbitrary or specific meanings and text with relationships to these shapes. There are many types of diagrams, such as flowcharts, organizational charts, concept maps, spider maps, block/architecture diagrams, mind-maps, block diagrams, Venn diagrams and pyramids. Depictions of some typeset and handwritten examples of possible diagrams are illustrated in FIGS. 1 to 6.

FIGS. 1A and 1B respectively show typeset and handwritten example concept maps 10 variously having shapes, defining diagram blocks or containers 12 and connectors 14, of different type (e.g., straight arrows, curved arrows), which connect or designate relationships between the diagram blocks 12. Further, in FIG. 1B the containers 12 contain text 16. Generally in concept maps the connections between the blocks define conceptually related or dependent elements or themes defined by the text in those blocks. The blocks themselves may not be present in the concept map and instead the text (e.g., defined in text blocks having no associated shape or container) may be connected by the connectors.

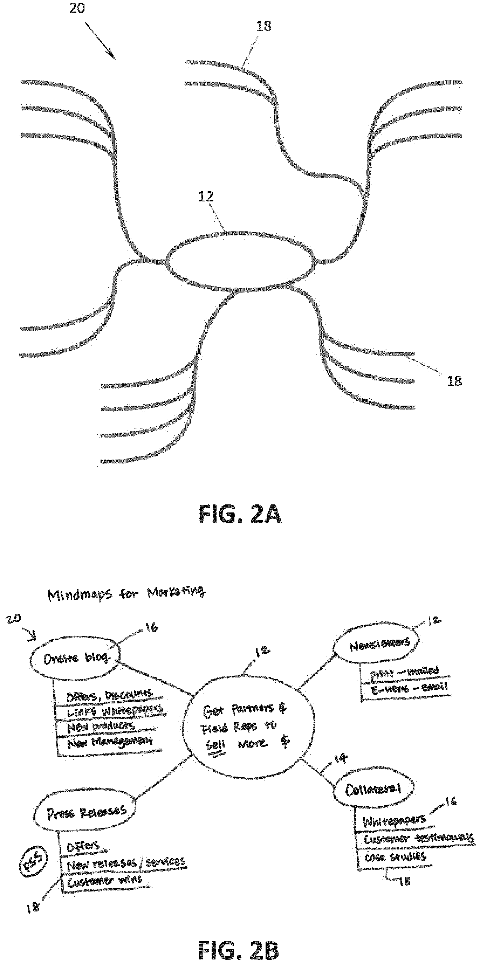

FIGS. 2A and 2B respectively show typeset and handwritten example mind-maps 20 variously having shapes defining diagram blocks or containers 12, connectors 14, of different type (e.g., straight lines, curved lines), which connect or designate relationships between the diagram blocks 12 and paths 18 to certain features or states of the mind maps. Further, in FIG. 2B the containers 12 and paths 18 have associated text 16. Generally in mind-maps the connections between the blocks define possible alternative states from central elements or themes defined by the text in those blocks, and the paths define key features of each alternative state defined by the text on those paths. The blocks themselves may not be present in the mind map and instead the text (e.g., defined in text blocks having no associated shape or container) may be connected by the connectors and paths.

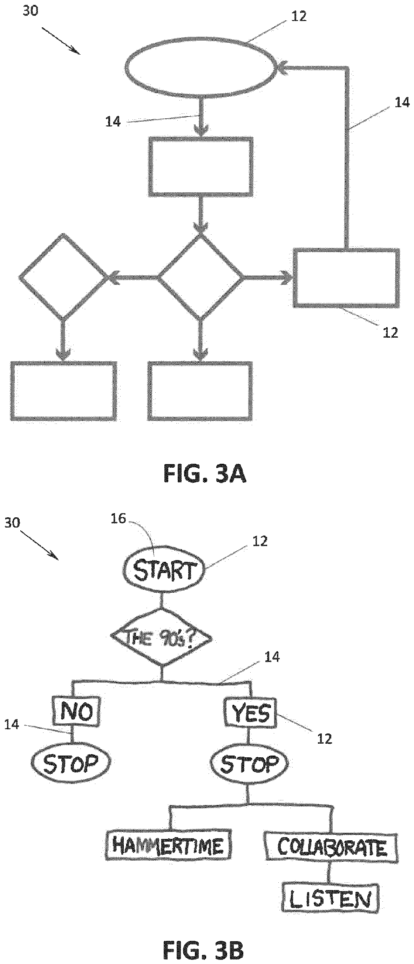

FIGS. 3A and 3B respectively show typeset and handwritten example flow charts or diagrams 30 variously having shapes, defining diagram blocks or containers 12, of different type (e.g., ovals, rectangles, diamonds), and connectors 14, of different type (e.g., straight arrows, bent arrows, branched lines), which connect or designate relationships between the diagram blocks 12. Further, in FIG. 3B the containers 12 contain text 16; text may also be associated with the connectors. Generally in flow charts the connections between the blocks define procedurally related or dependent elements or steps defined by the text in those blocks. The blocks themselves may not be present in the flow chart and instead the text (e.g., defined in text blocks having no associated shape or container) may be connected by the connectors.

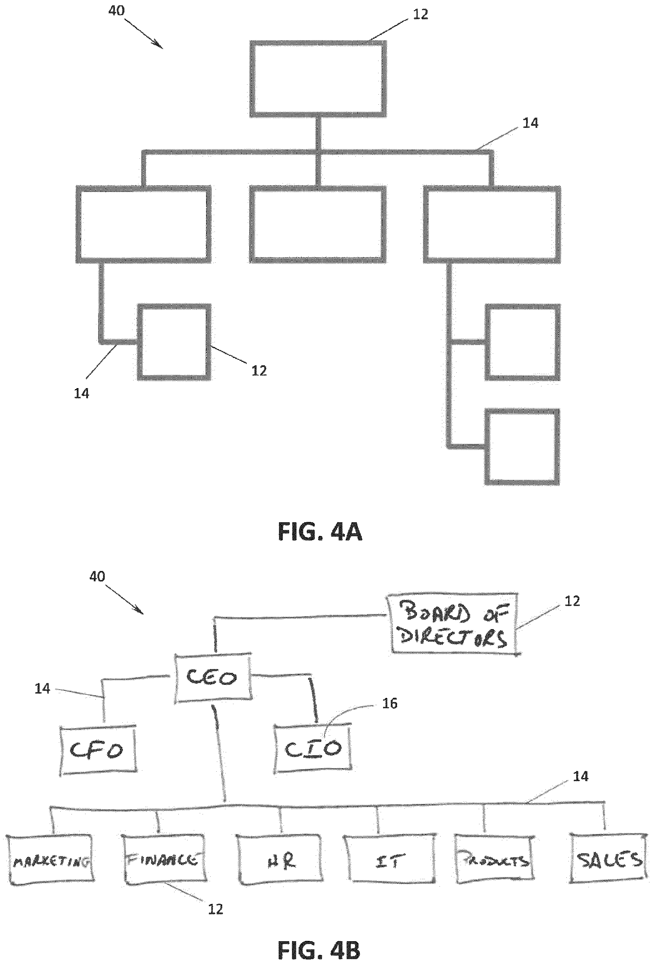

FIGS. 4A and 4B respectively show typeset and handwritten example organizational charts or diagrams 40 variously having shapes, defining diagram blocks or containers 12, and connectors 14, of different type (e.g., straight lines, bent lines, branched lines), which connect or designate relationships between the diagram blocks 12. Further, in FIG. 4B the containers 12 contain text 16. Generally in organizational charts the connections between the blocks define hierarchical relationships of members or functions of an organization or group defined by the text in those blocks. The blocks themselves may not be present in the organizational chart and instead the text (e.g., defined in text blocks having no associated shape or container) may be connected by the connectors.

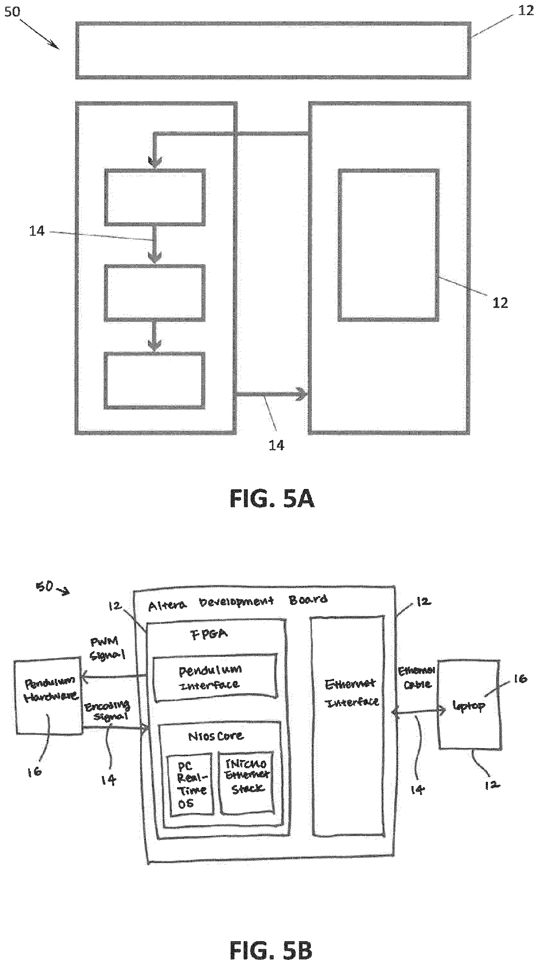

FIGS. 5A and 5B respectively show typeset and handwritten example block/architecture drawings 50 variously having shapes, defining diagram blocks or containers 12, having nested relationships (e.g., containers 12 within other containers 12), and connectors 14 which connect or designate relationships between the diagram blocks 12, including between nested blocks. Further, in FIG. 5B the containers 12 and connectors have associated text 16. Generally in architecture drawings the nested blocks define arrangement or possession of device or process components, and the connections between the blocks define functional relationships between the blocks defined by the text in those blocks.

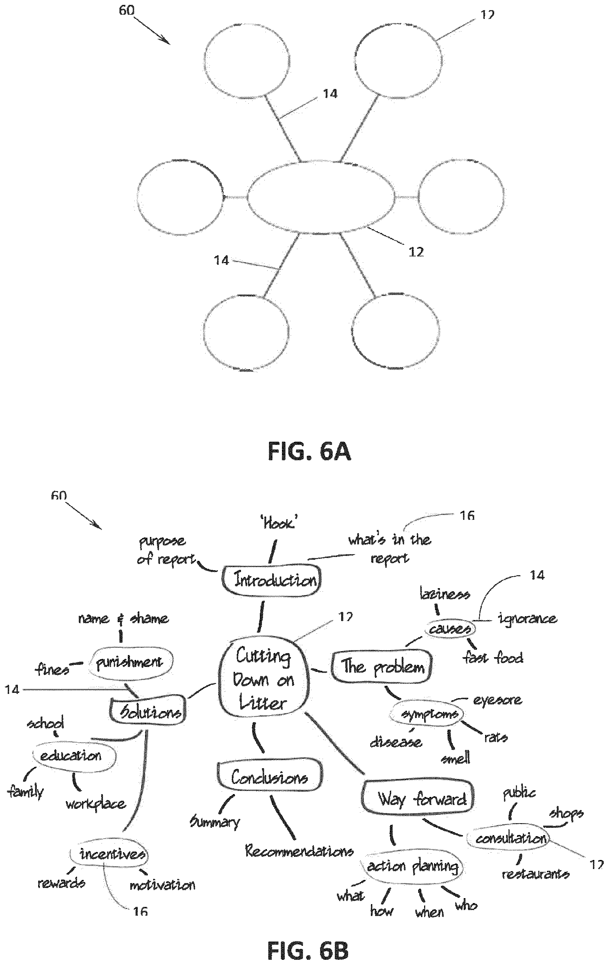

FIGS. 6A and 6B respectively show typeset and handwritten example spider maps 60 variously having shapes, defining diagram blocks or containers 12 and connectors 14 which connect or designate relationships between the diagram blocks 12. Further, in FIG. 6B the containers 12 and connectors have associated text 16. Generally in spider maps the connections between the blocks and/or text define dependent relationships or states from a central element or theme defined by the text.

The diagrams illustrated in FIGS. 1 to 6 are merely examples and other or different elements than those depicted for each diagram type, or different types or forms of the depicted elements themselves, may be present in the diagrams in addition or in the alternative. Further, other definitions of these diagram types are possible as well as combinations thereof. These myriad possible variations of combining the base components of shapes (connections with or without containers) and text in diagrams can cause issues for the accurate recognition of these elements input as hand-drawn or written content to a computing device. Diagrams are particularly used in education and business settings where the user of the computing device creates a diagram, for example, during a lecture or meeting to capture concepts, issues or solutions being discussed. This is usually done by the user launching a handwritten diagram or sketch application on the computing device which accepts and interprets, either locally in the device or remotely via a communications link of the device, hand-drawn input on a touch sensitive surface or a surface monitored by a relative position detection system.

Conventionally such handwritten diagramming applications are limited in their capabilities to handle the above-described complexity of diagramming and typically constrain users to adopt behaviors or accept compromises which do not reflect the user's original intent. As a result some conventional handwritten diagramming applications force users to navigate menus to select and draw shapes and insert text in relation to shapes. As such, users are unable to draw shapes and connectors naturally or freely.

Some conventional applications recognize hand-drawn shapes and handwritten text well with reasonable creative freedom offered to users. However, the ability to change the drawn diagrams, such as to edit elements of the diagram to add, omit or replace elements, adapt the diagram to an evolving concept, convert the type of diagram, etc., is limited where only certain operations are available and only available on the typeset version of the diagram, especially with respect to manipulations of the relative positions of diagram elements while retaining recognized relationships, such as connected containers, for example, and not on the handwritten input, so-called digital ink, and/or requires gestures to be learnt or selection to be made via menus, as described above.

For example, US Patent No. 8,014,607 describes an inferred mode protocol which allows certain editing operations to be directly on the digital ink. However, the described operations are very limited. Further, no solution is provided for the ability to manipulate the relative position of the diagram elements in digital ink while retaining recognized relationships. US Patent No. 6,525,749 describes relative manipulations on the digital ink with respect to repositioning operations in which the links between objects are geometrically transformed to maintain characteristic shape and have their linking end points moved. However, there is no disclosure as to the manner of achieving these transforms in an expected or pleasing manner for users.

US Patent No. 7,394,935 also describes relative manipulations on the digital ink with respect to repositioning operations, and resizing. However, in these operations the connection points are maintained, such that the digital ink is either merely scaled in accordance with the manipulation, and as such the user would be required to perform further interaction to return the digital ink to its originally drawn dimensions, e.g., moving a container away from its connected container(s) would cause the connector to stretch in both x and y dimensions, or the connectors are 'reflowed' by re-computing a backbone (horizontal and vertical lines) that approximates the digital ink of the connector when the connector is resized or changed to a different form (e.g., straight to bent). This requires regeneration of the digital ink, which may be done through normalization of the connector ink through segmentation at high curvature points (cusps) as described in the related US Patent No. 7,324,691. Accordingly, the resultant manipulated digital ink may be quite different to the originally drawn ink, requiring intervention by users.

US 7 394 935 B2 describes a system and method for editing ink objects recognized in ink input. An ink parser may recognize an ink object in ink input and then an ink editing user interface may edit the ink object recognized by the ink parser. The ink parser may include a chart detector, shape recognizer, and various ink object recognizers such as a chart recognizer, a list detector, and a table detector. The various ink object recognizers may recognize particular ink objects. The ink editing user interface may edit the ink object recognized by the ink parser. The ink editing user interface may include a chart editor, list editor, table editor, mode switcher, and a visualizer. The mode switcher may switch the ink editing system between inking mode and ink editing mode.

EP 0 825 558 A2 describes methods and apparatuses for displaying a selection and for deriving an outline of a graphical object for use in a computer based free form graphical display system. Generation of outlines of graphical objects may be used to indicate selection or to perform link rerouting in a system for maintaining the topology of a node-link diagram. An outline is created by performing the steps of creating a first simple curve at a predetermined distance from one side of said graphical object and creating a second simple curve at the predetermined distance from the other side of the graphical object; determining which of the first simple curve or said second simple curve is longest, and providing the longest of the first and second simple curves as the outline.

### SUMMARY

The examples of the present disclosure that are described herein below provide systems, methods and software for capturing, processing and managing hand-drawn and handwritten content on portable and non-portable computing devices.

The underlying technical problem is solved by the system for managing connections of diagrams elements on a computing device according to independent claim 1. Additional embodiments are defined in the dependent claims 2 to 5.

In some implementations of the system, the at least one connector is identified based on characteristics of the connector and positional relationships between the diagram elements. In addition, the at least one identified connector is a non-linear connector and/or a curved connector.

In some implementations of the system, the at least one non-transitory computer readable medium is configured to maintain a radius of curvature of the curved connector when causing re-display of the diagram elements.

In some implementations of the system, the interactive ink is digital ink.

The underlying technical problem is solved by the method for managing connections of diagrams elements on a computing device according to independent claim 6. Additional embodiments are defined in the dependent claims 7 to 10.

In some implementations of the method, the method includes the step of identifying the at least one connector based on characteristics of the connector and positional relationships between the diagram elements. In addition, the at least one identified connector may be a non-linear connector and/or a curved connector.

In some implementations of the method, the method includes the step of maintaining a radius of curvature of the curved connector when re-displaying the diagram elements.

In some implementations of the method, the interactive ink is digital ink.

The underlying technical problem is further solved by the non-transitory computer readable medium having a computer readable program code embodied therein according to independent claim 11. Additional embodiments are defined in the dependent claims 12 to 15.

In some implementations, the non-transitory computer readable medium implements the step of identifying the at least one connector based on characteristics of the connector and positional relationships between the diagram elements. In addition, the at least one identified connector may be a non-linear connector and/or a curved connector.

In some implementations, the non-transitory computer readable medium implements the step maintaining a radius of curvature of the curved connector when re-displaying the diagram elements.

In some implementations, the interactive ink is digital ink.

### BRIEF DESCRIPTION OF THE DRAWINGS

The present system and method will be more fully understood from the following detailed description of the examples thereof, taken together with the drawings. In the drawings like reference numerals depict like elements. In the drawings:
FIGS. 1A and 1B respectively show typeset and handwritten example concept maps;
FIGS. 2A and 2B respectively show typeset and handwritten example mind-maps;
FIGS. 3A and 3B respectively show typeset and handwritten example flow charts or flow diagrams;
FIGS. 4A and 4B respectively show typeset and handwritten example organizational charts or diagrams;
FIGS. 5A and 5B respectively show typeset and handwritten example block/architecture drawings;
FIGS. 6A and 6B respectively show typeset and handwritten example spider maps;
FIG. 7 shows a block diagram of a computing device in accordance with an example of the present system and method;
FIG. 8 shows a block diagram of a system for handwriting recognition in accordance with an example of the present system and method;
FIG. 9 shows a block diagram illustrating detail of the handwriting recognition system of FIG. 8 in accordance with an example of the present system and method;
FIG. 10A shows an example hand-drawn diagram rendered in digital ink;
FIG. 10B shows a movement operation on a block element of the diagram of FIG. 10A with example consequential effect on an associated connector in accordance with an example of the present system and method;
FIG. 11A and 11B respectively show the diagrams of FIG. 10A and 10B rendered in typeset ink depicting geometrical characteristics of the connected relationship of the diagrams of FIG. 10A and 10B defined in accordance with an example of the present system and method;
FIG. 12A shows an example hand-drawn diagram rendered in digital ink;
FIG. 12B shows a movement operation on a block element of the diagram of FIG. 12A with example consequential effect on an associated connector in accordance with an example of the present system and method;
FIG. 12C shows a movement operation on a block element of the diagram of FIG. 12A with example consequential effect on an associated connector in accordance with another example of the present system and method;
FIG. 13A, 13B and 13C respectively show the diagrams of FIG. 12A, 12B and 12C rendered in typeset ink depicting geometrical characteristics of the connected relationship of the diagrams of FIG. 12A, 12B and 12C defined in accordance with an example of the present system and method;
FIG. 14A shows an example hand-drawn diagram rendered in digital ink;
FIG. 14B shows a movement operation on a block element of the diagram of FIG. 14A with example consequential effect on an associated connector in accordance with an example of the present system and method; and
FIG. 15A and 15B respectively show the diagrams of FIG. 14A and 14B rendered in typeset ink depicting geometrical characteristics of the connected relationship of the diagrams of FIG. 14A and 14B defined in accordance with an example of the present system and method.

### DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

Reference to and discussion of directional features such as up, down, above, below, lowest, highest, horizontal, vertical, etc., are made with respect to the Cartesian coordinate system as applied to the input surface on which the input to be recognized is made. Further, terms such as left and right are made in relation to the reader's frame of reference when viewing the drawings. Furthermore, the use of the term 'text' in the present description is understood as encompassing all alphanumeric characters, and strings thereof, in any written language and common place non-alphanumeric characters, e.g., symbols, used in written text. Further still, the term 'non-text' in the present description is understood as encompassing freeform handwritten or hand-drawn content and rendered text and image data, as well as non-alphanumeric characters, and strings thereof, and alphanumeric characters, and strings thereof, which are used in non-text contexts. Furthermore, the examples shown in these drawings are in a left-to-right written language context, and therefore any reference to positions can be adapted for written languages having different directional formats.

The various technologies described herein generally relate to capture, processing and management of hand-drawn and handwritten content on portable and non-portable computing devices in a manner which retains the inputted style of the content while allowing conversion to a faithful typeset or beautified version of that content. The systems and methods described herein may utilize recognition of users' natural writing and drawing styles input to a computing device via an input surface, such as a touch sensitive screen, connected to, or of, the computing device or via an input device, such as a digital pen or mouse, connected to the computing device or via a surface monitored by a position detection system. Whilst the various examples are described with respect to recognition of handwriting input using so-called online recognition techniques, it is understood that application is possible to other forms of input for recognition, such as offline recognition in which images rather than digital ink are recognized. The terms hand-drawing and handwriting are used interchangeably herein to define the creation of digital content by users through use of their hands either directly onto a digital or digitally connected medium or via an input tool, such as a hand-held stylus. The term "hand" is used herein to provide concise description of the input techniques, however the use of other parts of a users' body for similar input is included in this definition, such as foot, mouth and eye.

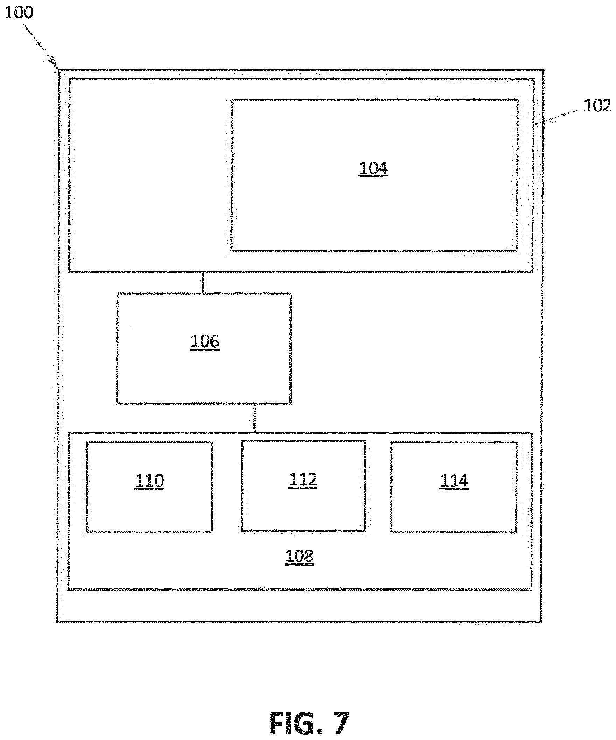

FIG. 7 shows a block diagram of an example computing device 100. The computing device may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or the like. The computing device 100 includes components of at least one processing element, some form of memory and input and/or output (I/O) devices. The components communicate with each other through inputs and outputs, such as connectors, lines, buses, cables, buffers, electromagnetic links, networks, modems, transducers, IR ports, antennas, or others known to those of ordinary skill in the art.

The illustrated example of the computing device 100 has at least one display 102 for outputting data from the computing device such as images, text, and video. The display 102 may use LCD, plasma, LED, iOLED, CRT, or any other appropriate technology that is or is not touch sensitive as known to those of ordinary skill in the art. At least some of the display 102 is co-located with at least one input interface 104. The input interface 104 may be a surface employing technology such as resistive, surface acoustic wave, capacitive, infrared grid, infrared acrylic projection, optical imaging, dispersive signal technology, acoustic pulse recognition, or any other appropriate technology as known to those of ordinary skill in the art to receive user input. The input interface 104 may be bounded by a permanent or video-generated border that clearly identifies its boundaries. Instead of, or additional to, an on-board display, the computing device 100 may have a projected display capability or is able to operate with a projected display, such that the input interface is a virtual surface. Further, the display itself may be separate from and connected to the computing device.

The computing device 100 may include one or more additional I/O devices (or peripherals) that are communicatively coupled via a local interface. The additional I/O devices may include input devices such as a keyboard, mouse, scanner, microphone, touchpads, bar code readers, laser readers, radio-frequency device readers, or any other appropriate technology known to those of ordinary skill in the art. Further, the I/O devices may include output devices such as a printer, bar code printers, or any other appropriate technology known to those of ordinary skill in the art. Furthermore, the I/O devices may include communications devices that communicate both inputs and outputs such as a modulator/demodulator (modem; for accessing another device, system, or network), a radio frequency (RF) or other transceiver, a telephonic interface, a bridge, a router, or any other appropriate technology known to those of ordinary skill in the art. The local interface may have additional elements to enable communications, such as controllers, buffers (caches), drivers, repeaters, and receivers, which are omitted for simplicity but known to those of skill in the art. Further, the local interface may include address, control, and/or data connections to enable appropriate communications among the other computer components.

The computing device 100 also includes a processor 106, which is a hardware device for executing software, particularly software stored in a memory 108. The processor can be any custom made or commercially available general purpose processor, a central processing unit (CPU), commercially available microprocessors including a semiconductor based microprocessor (in the form of a microchip or chipset), microcontroller, digital signal processor (DSP), application specific integrated circuit (ASIC), field programmable gate array (FPGA) or other programmable logic device, discrete gate or transistor logic, discrete hardware components, state machine, or any combination thereof designed for executing software instructions known to those of ordinary skill in the art.

The memory 108 can include any one or a combination of volatile memory elements (e.g., random access memory (RAM, such as DRAM, SRAM, or SDRAM)) and nonvolatile memory elements (e.g., ROM, EPROM, flash PROM, EEPROM, hard drive, magnetic or optical tape, memory registers, CD-ROM, WORM, DVD, redundant array of inexpensive disks (RAID), another direct access storage device (DASD), or any other magnetic, resistive or phase-change nonvolatile memory). Moreover, the memory 108 may incorporate electronic, magnetic, optical, and/or other types of storage media. The memory 108 can have a distributed architecture where various components are situated remote from one another but can also be accessed by the processor 106. Further, the memory 108 may be remote from the device, such as at a server or cloud-based system, which is remotely accessible by the computing device 100. The memory 108 is coupled to the processor 106, so the processor 106 can read information from and write information to the memory 108. In the alternative, the memory 108 may be integral to the processor 106. In another example, the processor 106 and the memory 108 may both reside in a single ASIC or other integrated circuit.

The software in the memory 108 includes an operating system 110, an input management system 112 and an input recognition system 114, which may each include one or more separate computer programs. Each of these has an ordered listing of executable instructions for implementing logical functions. The operating system 110 controls the execution of the input management system 112 and the input recognition system 114, or may incorporate the functions of these systems. The operating system 110 may be any proprietary operating system or a commercially or freely available operating system, such as WEBOS, WINDOWS^{®}, MAC and IPHONE OS^{®}, LINUX, and ANDROID. It is understood that other operating systems may also be utilized. Alternatively, the input management system 112 and input recognition system 114 of the present system and method may be provided without use of an operating system.

The input management system 112 includes one or more processing elements related to detection, management and treatment of hand-drawn shapes and handwritten text input by users (discussed in detail later). The software may also include one or more applications related to input recognition, different functions, or both. Some examples of other applications include a text editor, telephone dialer, contacts directory, instant messaging facility, computer-aided design (CAD) program, email program, word processing program, web browser, and camera. The input management system 112, and the applications, include program(s) provided with the computing device 100 upon manufacture and may further include programs uploaded or downloaded into the computing device 100 after manufacture.

The present system and method make use of the input recognition system 114 in order to recognize handwritten input to the device 100, including handwritten text and hand-drawn shapes, e.g., non-text. The input recognition system 114 and any of its components, with support and compliance capabilities, may be a source program, executable program (object code), script, application, or any other entity having a set of instructions to be performed. When a source program, the program needs to be translated via a compiler, assembler, interpreter, or the like, which may or may not be included within the memory 108, so as to operate properly in connection with the operating system 110.

Furthermore, the input recognition system with support and compliance capabilities can be written as (a) an object oriented programming language, which has classes of data and methods; (b) a procedure programming language, which has routines, subroutines, and/or functions, for example but not limited to C, C++, Pascal, Basic, Fortran, Cobol, Perl, Java, Objective C, Swift, Python, C# and Ada; or (c) functional programing languages for example but no limited to Hope, Rex, Common Lisp, Scheme, Clojure, Racket, Erlang, OCaml, Haskell, Prolog, and F#.

Alternatively, the input recognition system 114 may be a method or system for communication with an input recognition system remote from the device, such as a server or cloud-based system, but is remotely accessible by the computing device 100 through communications links using the afore-mentioned communications I/O devices of the computing device 100. Further, the input management system 112 and the input recognition system 114 may operate together or be combined as a single system.

Strokes entered on or via the input interface 104 are processed by the processor 106 as digital ink. A user may enter a stroke with a finger or some instrument such as a pen or stylus suitable for use with the input surface. The user may also enter a stroke by making a gesture above the input interface 104 if technology that senses motions in the vicinity of the input surface 104 is being used, or with a peripheral device of the computing device 100, such as a mouse or joystick, or with a projected interface, e.g., image processing of a passive plane surface to determine the stroke and gesture signals. Regardless of the interaction type, the interactions are generally detected by the processor 106 and information representing the interactions is communicated to the input management system 112. Alternatively, or additionally, the strokes may be those of digital ink rendered from handwritten input to another device and loaded to the memory 108 of the device 100, or interpreted from images of content captured, for example, with a camera of the computing device 100 or images of content loaded to the memory 108 from an external source, for example, as an image file, document file, etc.

A stroke is characterized by at least the stroke initiation location, the stroke termination location, and the path connecting the stroke initiation and termination locations. Further information such as timing, pressure (if the display 102 of the device 100 is configured to provide information on such), angle at a number of sample points along the path may also be captured to provide deeper detail of the strokes. Because different users may naturally write the same object, e.g., a letter, a shape, a symbol, with slight variations, the input recognition system accommodates a variety of ways in which each object may be entered while being recognized as the correct or intended object.

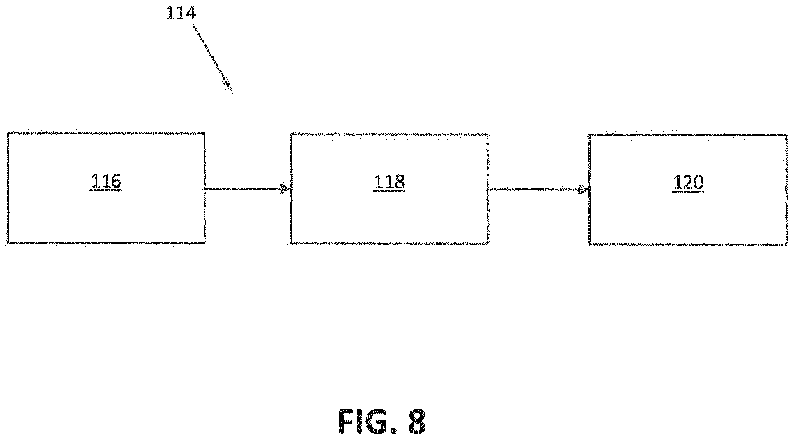

FIG. 8 is a schematic pictorial of an example of the input recognition system 114, in either its local (i.e., loaded on the device 100) or remote (i.e., remotely accessible by the device 100) forms. The input recognition system 114 includes stages such as preprocessing 116, recognition 118 and output 120. The preprocessing stage 116 processes the digital ink to achieve greater accuracy and reducing processing time during the recognition stage 118. This preprocessing may include normalizing of the path connecting the stroke initiation and termination locations by applying size normalization and/or methods such as B-spline approximation to smooth the input. The preprocessed strokes are then passed to the recognition stage 118 which processes the strokes to recognize the objects formed thereby. The recognized objects are then output 120 to the memory 108 and the display 102 as a digital ink or typeset ink versions of the handwritten elements/characters and hand-drawn shapes.

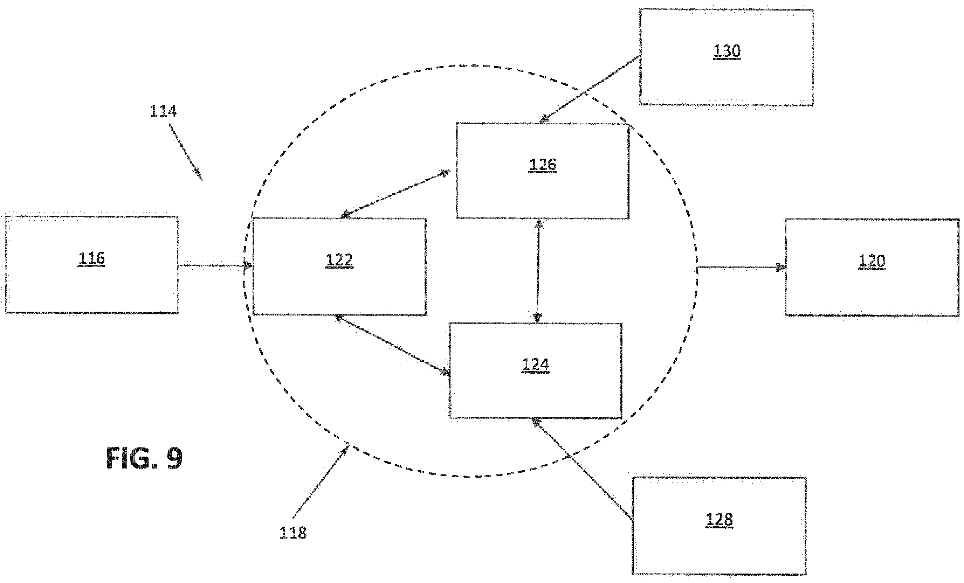

The recognition stage 118 may include different processing elements or experts. FIG. 9 is a schematic pictorial of the example of FIG. 8 showing schematic detail of the recognition stage 118. Three experts, a segmentation expert 122, a recognition expert 124, and a language expert 126, are illustrated which collaborate through dynamic programming to generate the output 120.

The segmentation expert 122 defines the different ways to segment the input strokes into individual element hypotheses, e.g., alphanumeric characters and mathematical operators, text characters, individual shapes, or sub expression, in order to form expressions, e.g., words, mathematical equations, or groups of shapes. For example, the segmentation expert 122 may form the element hypotheses by grouping consecutive strokes of the original input to obtain a segmentation graph where each node corresponds to at least one element hypothesis and where adjacency constraints between elements are handled by the node connections. Alternatively, the segmentation expert 122 may employ separate experts for different input types, such as text, drawings, equations, and music notation.

The recognition expert 124 provides classification of the features extracted by a classifier 128 and outputs a list of element candidates with probabilities or recognition scores for each node of the segmentation graph. Many types of classifiers exist that could be used to address this recognition task, e.g., Support Vector Machines, Hidden Markov Models, or Neural Networks such as Multilayer Perceptrons, Deep, Convolutional or Recurrent Neural Networks. The choice depends on the complexity, accuracy, and speed desired for the task.

The language expert 126 generates linguistic meaning for the different paths in the segmentation graph using language models (e.g., grammar or semantics). The expert 126 checks the candidates suggested by the other experts according to linguistic information 130. The linguistic information 130 can include a lexicon, regular expressions, etc. and is the storage for all static data used by the language expert 126 to execute a language model. A language model can rely on statistical information on a given language. The linguistic information 130 is computed off-line, with or without adaption according to the results of recognition and user interactions, and provided to the linguistic expert 126. The language expert 126 aims at finding the best recognition path. In one example, the language expert 126 does this by exploring a language model such as final state automaton (FSA) representing the content of linguistic information 130. In addition to the lexicon constraint, the language expert 126 may use a language model with statistical information modeling for how frequent a given sequence of elements appears in the specified language or is used by a specific user to evaluate the linguistic likelihood of the interpretation of a given path of the segmentation graph.

The input management system 112 provided by the present system and method allows users, such as students, academic and working professionals, to create handwritten diagrams and have those diagrams substantially faithfully recognized using the input recognition system 114 independent of the type of diagram created, e.g., flowcharts, organizational charts, concept maps, spider maps, block/architecture diagrams, mind-maps, block diagrams, Venn diagrams and pyramids. This list is not exhaustive and other types, or non-types, of diagrams are possible. For example, the different elements of the hand-drawn diagrams illustrated in FIGS. 1B, 2B 3B 4B, 5B and 6B are individually recognized together with any spatial and context relationships there between without regard to the diagram type.

As discussed earlier, these diagram elements include shape and text elements. Shape or drawing elements are those that define graphic or geometric formations in linear or non-linear configurations, and include containers, connectors and free-form drawings. Text elements are those that contain text characters and include text blocks and labels for the text blocks and shape elements. Both text blocks and labels may contain text of one or more characters, words, sentences or paragraphs provided in one or more vertical lines. Text blocks may be contained by containers (internal text blocks) or may be provided outside of containers (external text blocks) or un-contained. External text blocks may be unrelated to containers or other elements of a diagram or may be directly related to certain other diagram elements.

Further, the input management system 112 provided by the present system and method allows users to hand-draw such shapes and text freely as they would on paper without being slowed by the technology, while benefiting from the power of digital tools which allow capture of editing operations of the created diagrams. In particular, editing is supported which enables the shapes to be moved and manipulated for the creation of space for new ideas, the change of connections or shape type, and the handling of editing gestures.

In US Patent Application No. 14/955,174 filed claiming a priority date of 19 October 2015 in the name of the present Applicant and/or Assignee, description is provided of a system and method that handles editing operations performed on connectors by moving the points of connection of the connectors with diagram element blocks (e.g., shapes, containers, text blocks) in relation to geometrical characteristics of the connection relationship. These geometrical characteristics include the centers of geometry of the diagram blocks and connections paths defined in relation thereto.

In particular, in this earlier disclosure, a line is determined which extends from either end of a connector, along the connector's length, into the diagram blocks it connects, and a connection path is defined in relation to this extension or projection line. If the connector is centered on the respective connected boundaries of the diagram blocks, the connection path passes through the centers of geometry of the diagram blocks. However, if the connector is not centered on, or offset from, the respective connected boundaries, the connection path is defined between points at which the connector projection line intersects with lines normal or perpendicular thereto that extend through the center of geometry of each diagram block, where these intersection points are similarly offset from the respective center of geometry.

The normal lines are substantially parallel to one another, and this parallelism is substantially maintained during editing operations, such as user selection and drag or push, resizing. That is, if the relative positions of the diagram blocks are changed through an editing operation, the normal lines are rotated in correspondence with the new relative x- and y-positions of the blocks in order to substantially maintain their parallelism. The intersection points of the connection path are similarly maintained on the rotated normal lines, with or without consequential relative shifts required to retain one or more of the points within the respective diagram block, during the editing operation. As such, the connection path is rotated with the normal lines and so the connector that is rendered on this connection path. Accordingly, the corresponding connection points of the connector at the boundaries of the diagram blocks may be adjusted based on the now rotated connector. However, as the connection itself is respected, rather than the parameters of the connection, the connector remains sensibly connected to the diagram blocks, thereby allowing total free movement of the diagram objects by users.

In other embodiments of this earlier disclosure, situations involving multiple-connectors are handled by using additional or different geometrical characteristics, such as defining a common connection path for parallel connectors, and adjusting connection points of crossed connectors using angles at which the connectors connect to each connected diagram block or the angles made between a connection path connecting the centers of geometry of those diagram blocks and the normal lines thereof.

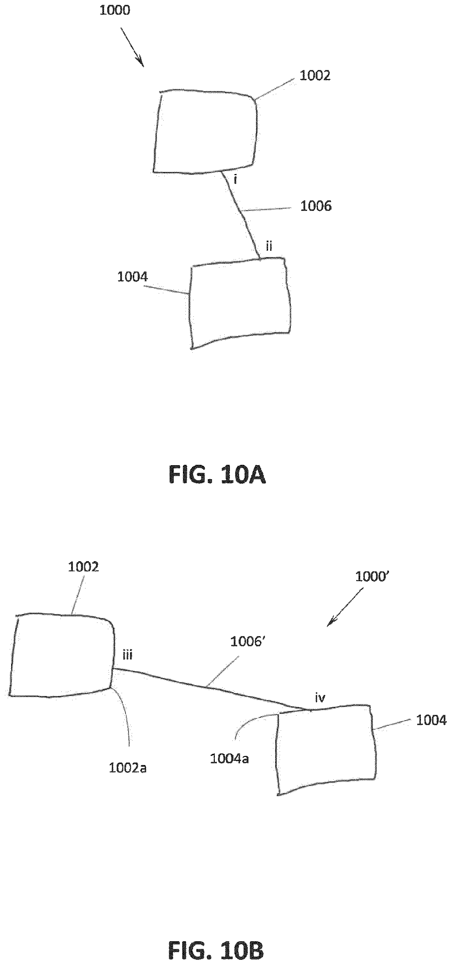

In the system and method of the present disclosure, further geometrical characteristics of the connection relationship are defined and managed during editing operations in order to account for further connection relationships, such as one or more connected blocks having a non-regular shape or being connected with one or more non-linear connectors, e.g., curved or arced connectors. The handling of editing operations performed on connectors by the present system and method is now described in relation to example diagrams illustrated in FIGS. 10 to 15.

FIG. 10 shows a movement operation on a digital ink block with example consequential effect on a digital ink connector associated therewith in a hand-drawn diagram 1000. It is noted that the diagram 1000 is similar to an example depicted in the afore-mentioned US Patent Application No. 14/955,174, however the movement operation of FIG. 10 is in accordance with an example of the present system and method.

In FIG. 10A, the diagram 1000 includes a block 1002 and a block 1004 connected by a connector 1006. The hand-drawn diagram 1000 may be displayed by the input management system as a digital ink diagram on the display 102 and/or the input interface 104 of the computing device 100, for example. In FIG. 10B, the block 1004 is moved relative to the block 1002 with consequential adjustment of the display of the connector by the input management system 112 as an adjusted connector 1006' thereby forming an edited version 1000' of the diagram 1000. The adjusted display of the digital ink elements may be performed by rendering the adjusted digital ink elements from a pre-defined or dynamic digital ink library, or re-rendered versions of the original digital ink such as in a manner, for example, as described in US Patent Application No. 14/955,155 filed claiming a priority date of 19 October 2015 in the name of the present Applicant and/or Assignee.

As can be seen, connection points i and ii of the connector 1006 to boundaries of the blocks 1002 and 1004, respectively, are adjusted to connection points iii and iv for the adjusted connector 1006' about corners 1002a and 1004a of the block boundaries, respectively. The adjusted display of the connector appears natural and respectful to the intended edit to the diagram 1000 by the user. The boundaries of the diagram element blocks may be defined as the hand-drawn, or typeset converted, boundary of non-text elements, such as containers, shapes, or at the bounding box of the handwritten, or typeset converted, text elements, such as non-contained text blocks. The determination of bounding boxes of text blocks is well known to one of ordinary skill in the art.

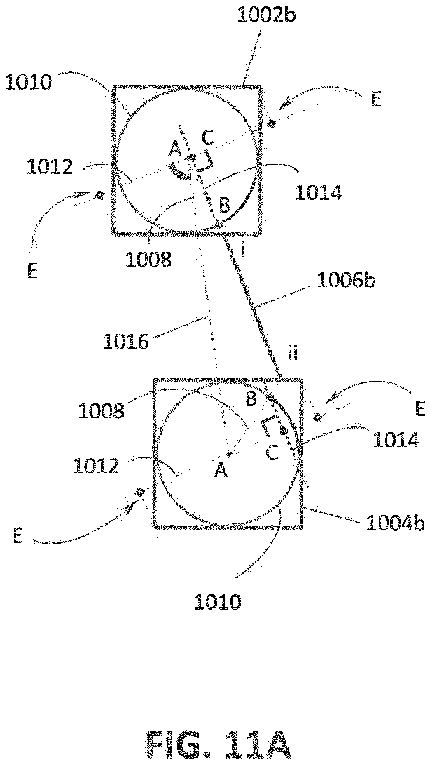

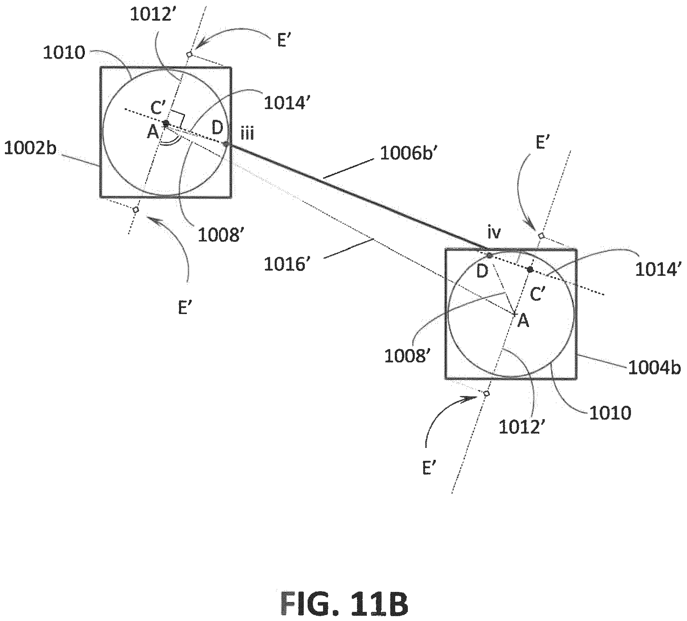

The manner in which the connection points of the connector 1006 are successfully adjusted during the movement operation is explained with reference to FIG. 11 which shows the movement operation of FIG. 10 in typeset form of the diagram 1000. The typesetted version of the diagrams herein is used for purposes of clarity of description only, and the following described techniques are also applicable to the digital ink versions. The typeset ink version of the digital ink diagram 1000 may for example be displayed on the display 102 and/or the input interface 104 of the computing device 100, for example by the input management system 112 upon receipt of the recognized output 120 of the hand-drawn diagram 1000 input from the input recognition system 114. In this processing, the input management system 112 and/or input recognition system 114, may be configured to recognize and identify the diagram elements, such as diagram blocks, connectors, and geometrical characteristics and features thereof, through the recognition processing, for example.

In FIG. 11A, the block 1002 is displayed as a typeset block 1002b, the block 1004 is displayed as a typeset block 1004b, and the connector 1006 is displayed as a typeset connector 1006b and in FIG. 11B the adjusted connector 1006' is displayed as a typeset connector 1006b'. FIG. 11A shows geometrical characteristics or features of the relationships of the diagram elements which are determined and used by the present system and method for connection point adjustment.

These features include the centers of geometry A of the blocks 1002 and 1004, extension (dashed) lines 1008 of the connector 1006 which project from either end of the connector 1006 into the respective blocks 1002b and 1004b to intersect with the respective center of geometry A, ellipses 1010 defined about the center of geometry of each block, points B on the ellipses 1010 at which the respective extension or projection line 1008 intersect the respective ellipse 1010 such that the portion of each projection line 1008 between the points B and centers of geometry A forms a radial line of the ellipse 1010, parallel (dashed) lines 1012 which extend through the center of geometry of each block so that the lines 1012 of each block 1002 and 1004 are parallel with one another, normal (dashed) lines 1014 which extend normal to the respective line 1012 from a point C so as to intersect the respective point B on the respective ellipse 1010. The parallel lines 1012 are defined as perpendicular lines to a linear line connecting connection points i and ii (i.e., the connector 1006b in the present example). This connection point line therefore accords with the normal lines 1014 connecting the points B and C, as can be seen.

It is noted that the depicted marks for the centers of geometry, dashed lines, ellipses and intersections points are provided in the drawings for illustrative purposes only, and are not typically displayed to users by the input management system 112. However, the user interface (UI) of the input management system 112 may provide users with the ability to display such markings for reference, for example during editing operations.

In FIG. 11B, these markings are shown in relation to the adjusted display of the diagram 1000' illustrated in FIG. 10B. As can be seen, the adjusted connector 1006b' is rendered as it is adjusted due to the movement of the block 1004 relative to the block 1002. In this adjustment, the parallel lines 1012 are maintained as passing through the centers of geometry A but are rotated in correspondence with the new relative x- and y-positions of the blocks 1002 and 1004 to form adjusted parallel lines 1012'. This is achieved as follows.

Further illustrated in FIG. 11A is a connecting (dashed) line 1016 which connects the two centers of geometry A. The angle between the connecting line 1016 and the parallel lines 1012 (depicted as a double angle in the drawings) is determined by the input management system 112. When the block 1004b is moved relative to the block 1002b, the connecting line 1016 is caused to move or rotate so as to define adjusted connecting line 1016', as shown in FIG. 11B. The input management system 112 maintains the angle between the connecting and parallel lines by similarly moving or rotating the parallel lines as the adjusted parallel lines 1012'. That is, the angle is retained between the adjusted connecting line 1016' and the adjusted parallel lines 1012'. The points C are retained on the parallel lines 1012 through this rotation, however the relative position on the adjusted parallel lines 1012' may also be moved to define adjusted points C'. The adjusted positions of the points C' are determined by the input management system 112 as follows.

Further illustrated in FIG. 11A are points E on the parallel lines 1012. The input management system 112 determines the points E in the present example by orthogonally projecting the parallel lines 1012 onto the blocks 1002b and 1004b at their maximum extents (shown in the drawings by lines connecting the respective points E to corners of the blocks 1002 and 1004). Upon movement of one or more of the blocks 1002 and 1004, the input management system 112 determines adjusted positions of the points E by orthogonally projecting the now adjusted parallel lines 1012' onto the maximal extents of the blocks.

In order to position the adjusted points C', the input management system 112 determines the (first) distance A-C between the points A and C on the respective (pre-adjusted) parallel lines 1012, the (second) distance A-E between the points A and E on the respective (pre-adjusted) parallel lines 1012 and the (third) distance A-E' between the points A and adjusted points E' on the respective adjusted parallel lines 1012', and positions the adjusted points C' so that the ratio of the pre-adjusted distances A-E and A-C is substantially equal to the ratio of the adjusted distances A-E' and A-C'. Alternatively, distance A-C' could be maintained equal to distance A-C unless distance A-C is greater than a fixed ratio of distance A-E', in which case distance A-C' is set to this fixed ratio.

The adjusted points C' are then used by the input management system 112 to determine adjusted normal lines 1014' from the adjusted points C' which intersect the ellipses 1010 at new (rotated or transposed) points D, as shown in FIG. 11B. At these transposed points D, re-projection (radial) lines 1008' are determined which project from the respective centers of geometry A through the transposed points D and onto the respective boundary of the blocks 1002b and 1004b. The points at which the respective re-projection lines 1008' intersect with the block boundaries define the adjusted connection points iii and iv for the adjusted connector 1006'.

Thus, in the present system and method, the adjusted connection path for the adjusted connector 1006b' is defined relative to ellipses defined with respect to the diagram element blocks rather than the connector itself. Accordingly, by the technique of the example of FIGS. 10 and 11, connection paths for connectors are determined based on mapping the pre-adjusted (first) connections points on the boundaries of the connected objects to ellipses defined around the centers of geometry of the pre-adjusted objects and mapping adjusted (second) connections points onto the boundaries of the connected objects from the ellipses of the adjusted objects, and therefore adjustment of the connection point positions is indirectly made with respect to the centers of geometry.

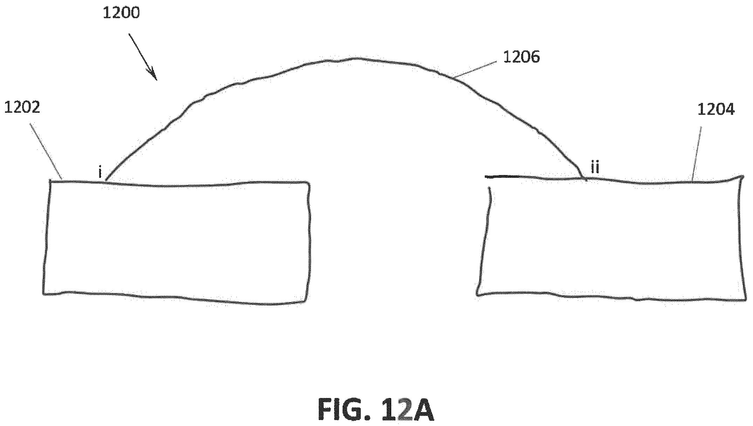

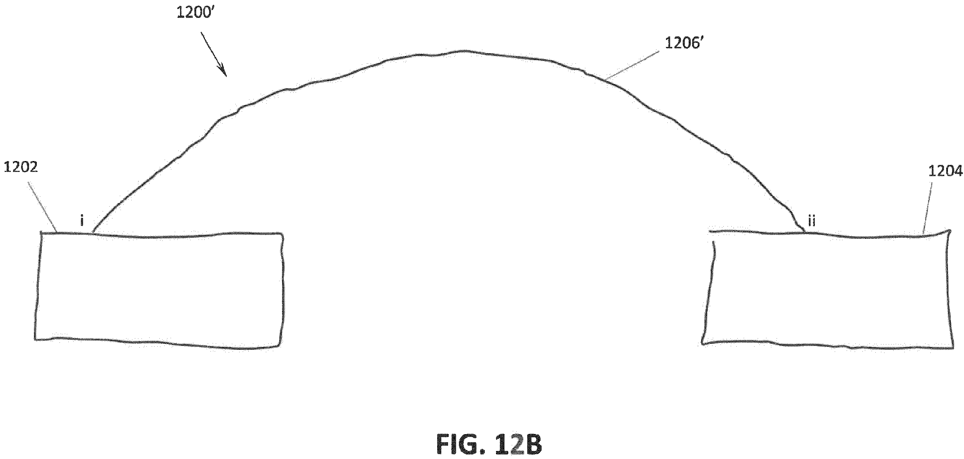

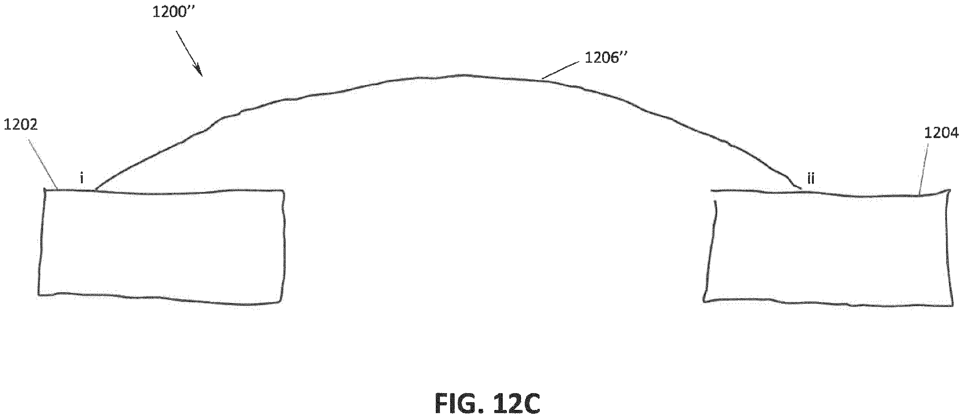

It is noted that while ellipses defined by the diagram element blocks are described herein, other geometrical constructs related to the shape and dimensions of the diagram element blocks may be defined and determined by the input management system 112 for mapping of the points of connection of the identified connectors from geometrical characteristics of the connected diagram element blocks, such as their dimensions. Such geometrical constructs serve to define the connection relationship of the diagram element blocks independent of the shape or boundaries of the blocks themselves, and independent of the characteristics of the connectors themselves. Characteristics of the connectors include shape and linearity. The example of FIGS. 10 and 11 relate to a linear connector, however the geometrical features used for the translation technique are also suitable for non-linear connectors. Non-linear connector examples are now described with respect to FIGS. 12 to 15.

FIG. 12 shows a movement operation on a digital ink block with example consequential effect on a digital ink connector associated therewith in a hand-drawn diagram 1200. In FIG. 12A, the diagram 1200 includes a block 1202 and a block 1204 connected by a curved or arced connector 1206. In FIG. 12B, the block 1204 is moved relative to the block 1202 with consequential adjustment display of the connector as an adjusted connector 1206' thereby forming an edited version 1200' of the diagram 1200. As can be seen, the connection points i and ii of the connector 1206 to the blocks 1202 and 1204, respectively, are not adjusted in this movement operation, as the block 1204 has been moved in only one dimension (i.e., horizontally) with respect the block 1202. However, due to this movement, the non-linear shape or curve of the connector 1206 has changed in the adjusted connector 1206'.

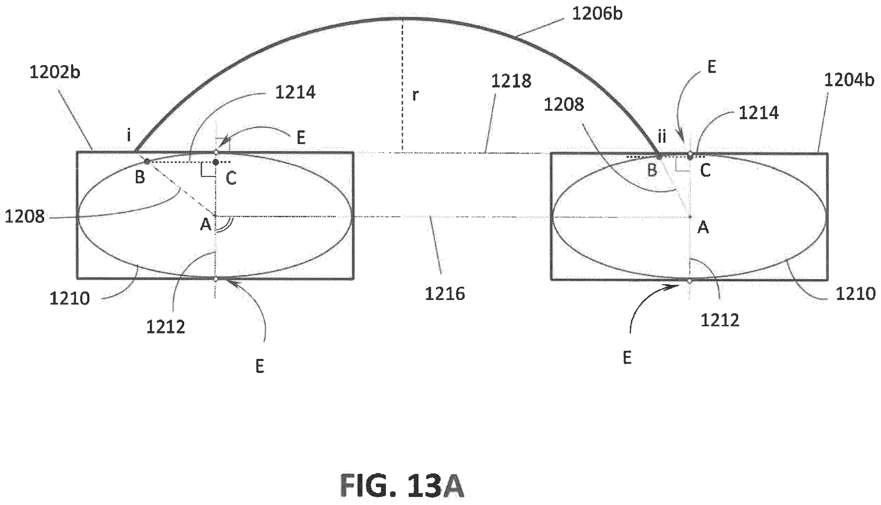

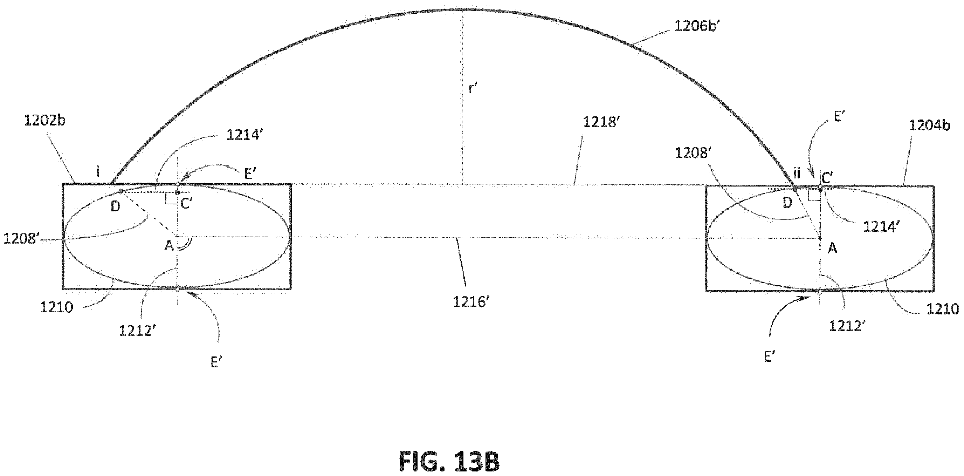

This is now explained with respect to FIGS. 13A and 13B which show the respective states of the movement operation of FIGS. 12A and 12B in typeset form of the diagram 1200. The typesetted version of the diagrams herein is used for purposes of clarity of description only, and the following described techniques are also applicable to the digital ink versions.

In FIG. 13A, the block 1202 is displayed as a typeset block 1202b, the block 1204 is displayed as a typeset block 1204b, and the connector 1206 is displayed as a typeset connector 1206b and in FIG. 13B the adjusted connector 1206' is displayed as a typeset connector 1206b'. FIG. 13A shows geometrical characteristics or features of the relationships of the diagram elements which are determined and used by the present system and method for connection point adjustment.

These features include the centers of geometry A of the blocks 1202 and 1204, extension (dashed) lines 1208 of the connector 1206 which project from either end of the connector 1206 into the respective blocks 1202b and 1204b to intersect with the respective center of geometry A, ellipses 1210 defined about the center of geometry of each block, points B on the ellipses 1210 at which the respective extension or projection line 1208 intersect the respective ellipse 1210 such that the portion of each projection line 1208 between the points B and centers of geometry A forms a radial line of the ellipse 1210, parallel (dashed) lines 1212 which extend through the center of geometry of each block so that the lines 1212 of each block 1202 and 1204 are parallel with one another, normal (dashed) lines 1014 which extend normal to the respective line 1212 from a point C so as to intersect the respective point B on the respective ellipse 1210, and a connecting (dashed) line 1216 which connects the two centers of geometry A. The parallel lines 1212 are defined as perpendicular lines to a linear line connecting connection points i and ii (e.g., a line 1218 defined between the aligned connected (top) boundaries of the blocks 1202 and 1204 in the present example). This connection point line 1218 therefore accords with the normal lines 1214 connecting the points B and C.

It is noted that the depicted marks for the centers of geometry, dashed lines, ellipses and intersections points are provided in the drawings for illustrative purposes only, and are not typically displayed to users by the input management system 112. However, the user interface (UI) of the input management system 112 may provide users with the ability to display such markings for reference, for example during editing operations.

In FIG. 13B, these markings are shown in relation to the adjusted display of the diagram 1200' illustrated in FIG. 12B. As can be seen, the adjusted connector 1206b' is rendered as it is adjusted due to the movement of the block 1204 relative to the block 1202. In this adjustment, the parallel lines 1212 are maintained as passing through the centers of geometry A but are rotated in correspondence with the new relative x- and y-positions of the blocks 1202 and 1204 to form adjusted parallel lines 1212'. This is achieved as follows.

The angle between the connecting line 1216 and the parallel lines 1212 (depicted as a double angle in the drawings) is determined by the input management system 112. When the block 1204b is moved relative to the block 1202b, the connecting line 1216 is caused to move or rotate so as to define adjusted connecting line 1216', as shown in FIG. 13B. The input management system 112 maintains the angle between the connecting and parallel lines by similarly moving or rotating the parallel lines as the adjusted parallel lines 1212'. That is, the angle is retained between the adjusted connecting line 1216' and the adjusted parallel lines 1212'. The points C are retained on the parallel lines 1212 through this rotation, however the relative position on the adjusted parallel lines 1212' may also move to define adjusted points C'. The adjusted positions of the points C' are determined by the input management system 112 as follows.

Further illustrated in FIG. 13A are points E on the parallel lines 1212. The input management system 112 determines the points E as the maximum extension of the orthogonal projection of the ellipses 1210 (shown in the drawings) on the respective parallel lines 1212. Upon movement of one or more of the blocks 1202 and 1204, the input management system 112 determines adjusted positions of the points E by orthogonally projecting the maximal extents of the ellipses 1210 onto the now adjusted parallel lines 1212'.

In order to position the adjusted points C', the input management system 112 determines the (first) distance A-C between the points A and C on the respective (pre-adjusted) parallel lines 1212, the (second) distance A-E between the points A and E on the respective (pre-adjusted) parallel lines 1212 and the (third) distance A-E' between the points A and adjusted points E' on the respective adjusted parallel lines 1212', and positions the adjusted points C' so that the ratio of the pre-adjusted distances A-E and A-C is substantially equal to the ratio of the adjusted distances A-E' and A-C'.

The adjusted points C' are then used by the input management system 112 to determine adjusted normal lines 1214' from the adjusted points C' which intersect the ellipses 1210 at new (rotated or transposed) points D, as shown in FIG. 13B. At these transposed points D, re-projection lines 1208' are determined which project from the respective center of geometry A through the transposed points D and onto the respective boundary of the blocks 1202b and 1204b. As can be seen however, in the present example, the transposed points D are at substantially the same position on the ellipses 1210 as the initial points C. Accordingly, the re-projection lines 1208' intersect with the block boundaries to define the adjusted connection points as the original connection points i and ii for the adjusted connector 1206'.

However, while the connection points remain the same in this one-dimensional transformation example, the connection path is still changed due to the non-linear shape of the connector 1206. In particular, as the distance between the blocks 1202 and 1204 is increased by the movement operation, the radius of curvature of the arced connector 1206 is also increased. That is, as shown in FIG. 13A, the radius of curvature r of the connector 1206, shown as the maximum distance from the connection point line 1218 to the arc of the connector 1206, is increased to the radius of curvature r' of the adjusted connector 1206', shown in FIG. 13B as the maximum distance from an adjusted line 1218' defined between the still aligned connected (top) boundaries of the blocks 1202 and 1204 to the arc of the adjusted connector 1206'. Similarly, the radius of curvature would be decreased if the separation distance was decreased, instead of increased.

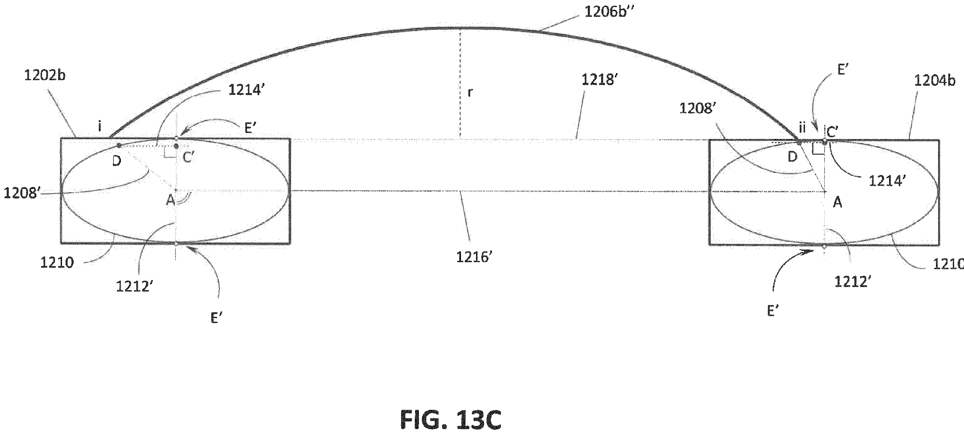

While the connection points of the moved blocks are rendered in a fashion which respects the connection relationship, the apparent growth (or shrinkage) of the curved connector may be unsettling to users, especially in situations where the edited diagram or diagram portion is in proximity of other content. Accordingly, further geometrical features of the connection relationships may be determined by the input management system 112 to adjust non-linear connectors so that the adjusted display of the connectors appears natural and respectful to the intended edit to the diagram by the user. An example of this adjustment is shown in FIGS. 12C and 13C.

In FIG. 12C, the block 1204 is moved relative to the block 1202 with consequential adjustment of the display of the connector as an adjusted connector 1206" thereby forming an edited version 1200" of the diagram 1200. As can be seen, the connection points i and ii of the connector 1206 to the blocks 1202 and 1204, respectively, are not adjusted in this movement operation, like in the example of FIGS. 12B and 13B. However, unlike this earlier example, the non-linear shape or curve of the connector 1206 is substantially not changed in the adjusted connector 1206".

In order to adjust the connector in this way, the input management system 112 determines the radius of curvature r of the connector 1206 as defined in FIG. 13A and maintains this radius of curvature through the transform. This is shown in FIG. 13C in which the adjusted connector 1206" has the radius of curvature r defined as the maximum distance from an adjusted line 1218" defined between the still aligned connected (top) boundaries of the blocks 1202 and 1204 to the arc of the adjusted connector 1206".

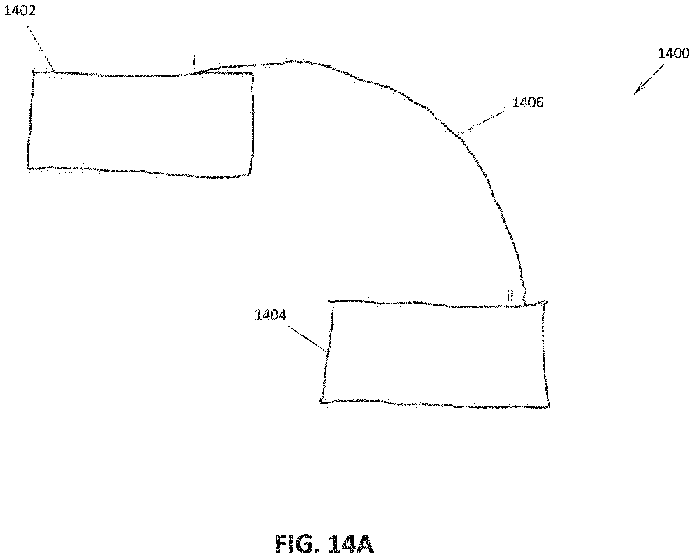

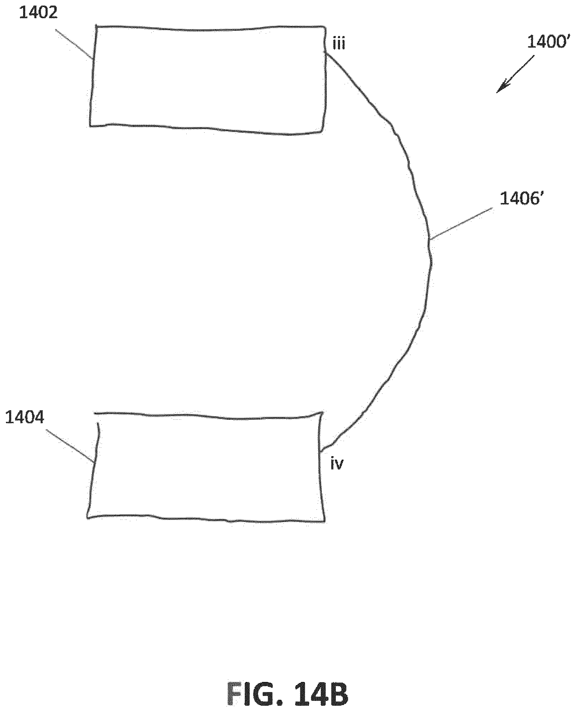

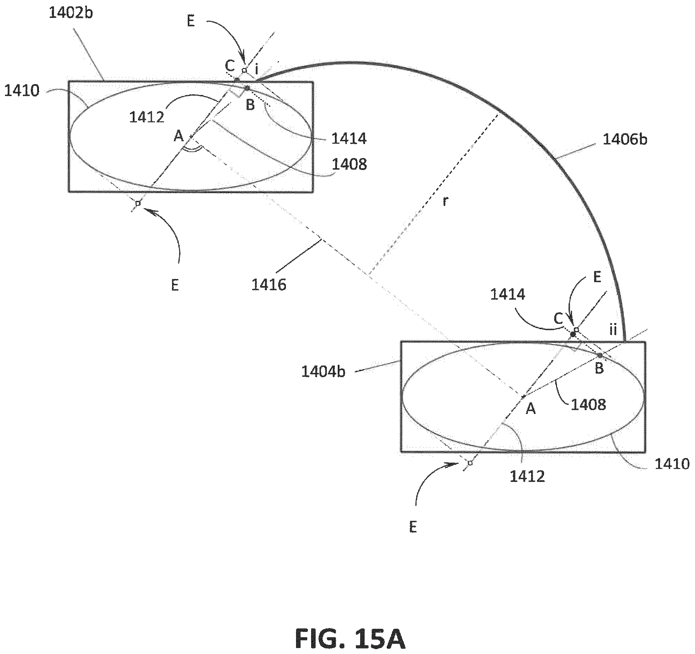

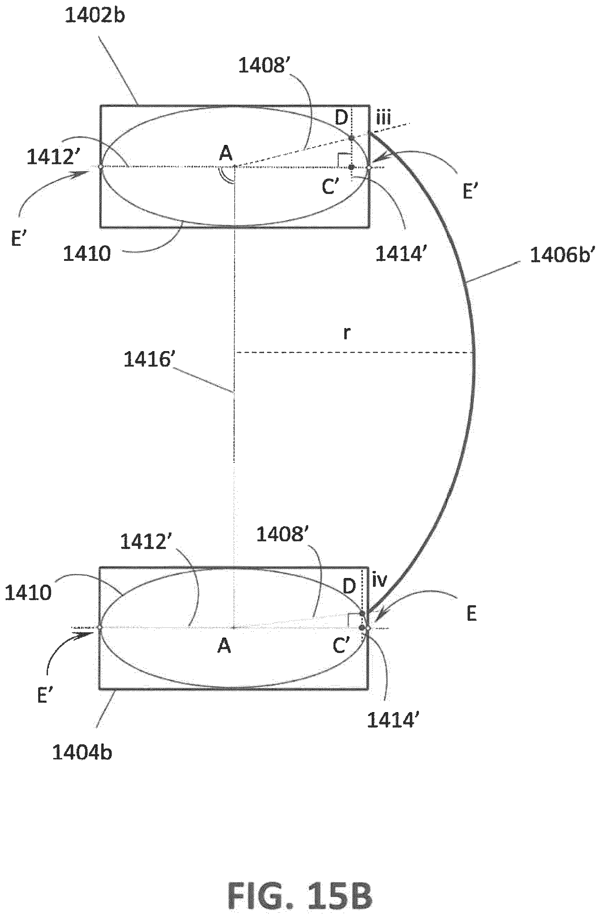

In this way, the adjusted display of non-linear connectors appears natural and respectful to the intended edit to the diagram by the user. In the present system and method, this transformation is also applicable for two-dimensional editing operations, e.g., both horizontal and vertical directions, or x- and y-directions. An example of a two-dimensional movement operation is illustrated in FIGS. 14 and 15.

FIG. 14 shows a movement operation on a digital ink block with example consequential effect on a digital ink connector associated therewith in a hand-drawn diagram 1400. In FIG. 14A, the diagram 1400 includes a block 1402 and a block 1404 connected by a curved or arced connector 1406. In FIG. 14B, the block 1404 is moved relative to the block 1402 with consequential adjustment display of the connector as an adjusted connector 1406' thereby forming an edited version 1400' of the diagram 1400. As can be seen, connection points i and ii of the connector 1406 to the blocks 1402 and 1404, respectively, are adjusted to connection points iii and iv for the adjusted connector 1406' about corners 1402a and 1404a, respectively. As can be seen the non-linear shape or curve of the connector 1406 is maintained in the adjusted connector 1406'. Accordingly, the adjusted display of the connector appears natural and respectful to the intended edit to the diagram 1400 by the user.

This is now explained with respect to FIGS. 15A and 15B which show the respective states of the movement operation of FIGS. 14A and 14B in typeset form of the diagram 1400. The typesetted version of the diagrams herein is used for purposes of clarity of description only, and the following described techniques are also applicable to the digital ink versions.

In FIG. 15A, the block 1402 is displayed as a typeset block 1402b, the block 1404 is displayed as a typeset block 1404b, and the connector 1406 is displayed as a typeset connector 1406b and in FIG. 15B the adjusted connector 1406' is displayed as a typeset connector 1406b'. FIG. 15A shows geometrical characteristics or features of the relationships of the diagram elements which are determined and used by the present system and method for connection point adjustment.

These features include the centers of geometry A of the blocks 1402 and 1404, extension (dashed) lines 1408 of the connector 1406 which project from either end of the connector 1406 into the respective blocks 1402b and 1404b to intersect with the respective center of geometry A, ellipses 1410 defined about the center of geometry of each block, points B on the ellipses 1410 at which the respective extension or projection line 1408 intersect the respective ellipse 1410 such that the portion of each projection line 1408 between the points B and centers of geometry A forms a radial line of the ellipse 1410, parallel (dashed) lines 1412 which extend through the center of geometry of each block so that the lines 1412 of each block 1402 and 1404 are parallel with one another, normal (dashed) lines 1414 which extend normal to the respective line 1412 from a point C so as to intersect the respective point B on the respective ellipse 1410, and a connecting (dashed) line 1416 which connects the two centers of geometry A. The parallel lines 1412 are defined as perpendicular lines to a linear line connecting connection points i and ii (not shown). This connection point line therefore accords with the normal lines 1414 connecting the points B and C.

It is noted that the depicted marks for the centers of geometry, dashed lines, ellipses and intersections points are provided in the drawings for illustrative purposes only, and are not typically displayed to users by the input management system 112. However, the user interface (UI) of the input management system 112 may provide users with the ability to display such markings for reference, for example during editing operations. This is achieved as follows.

The angle between the connecting line 1416 and the parallel lines 1412 (depicted as a double angle in the drawings) is determined by the input management system 112. When the block 1404b is moved relative to the block 1402b, the connecting line 1416 is caused to move or rotate so as to define adjusted connecting line 1416', as shown in FIG. 15B. The input management system 112 maintains the angle between the connecting and parallel lines by similarly moving or rotating the parallel lines as the adjusted parallel lines 1412'. That is, the angle is retained between the adjusted connecting line 1416' and the adjusted parallel lines 1412'. The points C are retained on the parallel lines 1412 through this rotation, however the relative position on the adjusted parallel lines 1412' may also move to define adjusted points C'. The adjusted positions of the points C' are determined by the input management system 112 as follows.

Further illustrated in FIG. 15A are points E on the parallel lines 1412. The input management system 112 determines the points E as the maximum extension of the orthogonal projection of the ellipses 1410 (shown in the drawings) onto the respective parallel lines 1412. Upon movement of one or more of the blocks 1402 and 1404, the input management system 112 determines adjusted positions of the points E by orthogonally projecting the maximal extents of the ellipses 1410 onto the now adjusted parallel lines 1412'.

In order to position the adjusted points C', the input management system 112 determines the (first) distance A-C between the points A and C on the respective (pre-adjusted) parallel lines 1412, the (second) distance A-E between the points A and E on the respective (pre-adjusted) parallel lines 1412 and the (third) distance A-E' between the points A and adjusted points E' on the respective adjusted parallel lines 1412', and positions the adjusted points C' so that the ratio of the pre-adjusted distances A-E and A-C is substantially equal to the ratio of the adjusted distances A-E' and A-C'.

The adjusted points C' are then used by the input management system 112 to determine adjusted normal lines 1414' from the adjusted points C' which intersect the ellipses 1410 at new (rotated or transposed) points D, as shown in FIG. 13B. At these transposed points D, re-projection radial lines 1408' are determined which project from the respective center of geometry A through the transposed points D and onto the respective the boundary of the blocks 1402b and 1404b. The points at which the respective re-projection lines 1408' intersect with the block boundaries define the adjusted connection points iii and iv for the adjusted connector 1406'.
Like the earlier example, the non-linear shape or curve of the connector 1406 is substantially not changed in the adjusted connector 1406'.

In order to adjust the connector in this way, the input management system 112 determines the radius of curvature r of the connector 1406 as shown in FIG. 15A as the maximum distance from the connecting line 1416 of the centers of geometry A of the blocks 1402b and 1404b to the arc of the connector 1406 and maintains this radius of curvature through the transform, as shown in FIG. 15B. It is noted that the radius of curvature in the present example is defined with respect to the connecting line of the connected block centers of geometry rather a line defined between the connected boundaries of the blocks, as in the earlier example. However, it is understood that such a line of the connected boundaries (that is, the boundaries of the blocks having the connection points of the connector) may be used in this example and the connecting line used in the earlier examples.

In the examples of the present system and method described herein, the input management system 112, in operation with the input recognition system 114 for example, causes display of input diagram elements in digital ink, rendered as interactive ink on a display of the computing device and identifies connectors in the diagram elements which connect diagram element blocks to one another. By determining a geometrical construct of each of the connected diagram elements based on geometrical characteristics of the connected diagram elements, such as the described exampled ellipses defined by the centers of geometry and block boundaries, the input management system 112 maps the points of connection of the connectors to the boundaries of the connected diagram elements onto the geometrical constructs, thereby defining mapped points.

The position of these mapped points are then adjusted by the input management system 112 when editing operations on the connected blocks or the connector itself are detected by the input management system 112, such as interactions at the input interface 104 of the computer device 100 with the displayed interactive ink by a user. The adjusted mapped points are used to re-display the diagram element blocks with adjusted connection points of the connectors by mapping the adjusted mapped points onto the boundaries of the connected diagram element blocks. In this way, the connection relationship of the diagram element blocks is defined independent of the shape or boundaries of the blocks themselves, and independent of the characteristics of the connectors themselves, thereby allowing substantially faithful editing of the displayed diagram elements during and after editing operations.

While the foregoing has described what is considered to be the best mode and/or other examples, it is understood that various modifications may be made therein and that the subject matter disclosed herein may be implemented in various forms and examples, and that they may be applied in numerous other applications, combinations, and environments, only some of which have been described herein. Therefore, the subject matter is not limited to the specific details, exhibits, and illustrated examples in this description. The scope of the protection is consequently solely defined by the appended claims.

The use of the verbs "comprise", "contain", "include", or any other variant, and their conjugations, does not exclude the presence of elements or steps other than those mentioned. The use of the indefinite article "a" or "an" when describing an element or a step does not exclude, unless otherwise stated, the presence of a plurality of such elements or steps. For instance the terms "a processor" may be considered as meaning "one or more processors", unless otherwise stated.

## Claims

1. A system for managing connections of diagrams elements (12, 14, 1002, 1004, 1006, 1202, 1204, 1206, 1402, 1404, 1406) on a computing device (100), the computing device (100) comprising a processor (106) and at least one non-transitory computer readable medium (108) for detecting and recognizing hand-drawn diagram elements (12, 14, 1002, 1004, 1006, 1202, 1204, 1206, 1402, 1404, 1406) input under control of the processor (106), the at least one non-transitory computer readable medium (108) configured to:
cause display of a plurality of input diagram elements (1002, 1004, 1006, 1202, 1204, 1206, 1402, 1404, 1406) in interactive ink on a display device (102) associated with the computing device (100);
identify at least one diagram element as a connector (1006, 1206, 1406) which connects a plurality of diagram elements (1002, 1004, 1202, 1204, 1402, 1404);
determine a geometrical construct (1010, 1210, 1410) of each of the connected diagram elements (1002, 1004, 1202, 1204, 1402, 1404) based on geometrical characteristics of the connected diagram elements (1002, 1004, 1202, 1204, 1402, 1404), wherein the geometrical construct (1010,1210,1410) is related to the shape and dimension of the diagram element (1002, 1004, 1202, 1204, 1402, 1404);
map points of connection of the at least one identified connector (1006, 1206, 1406) to the connected diagram elements (1002, 1004, 1202, 1204, 1402, 1404) onto the geometrical constructs (1010, 1210, 1410) to define mapped points (B);
adjust the positions of the mapped points (B) on the geometrical constructs (1010, 1210, 1410) based on one or more interactions received with the interactive ink of the at least one identified connector (1006, 1206, 1406), one or more of the connected diagram elements (1002, 1004, 1202, 1204, 1402, 1404), and projection lines (1008, 1208, 1408) of the connector (1006, 1206, 1406) which project from either end of the connector (1006, 1206, 1406) into the respective connected diagram elements (1002, 1004, 1202, 1204, 1402, 1404) to intersect with the respective center of geometry (A),
wherein the projection lines (1008, 1208, 1408) intersect the mapped points (B) on the geometrical constructs (1010, 1210, 1410) such that the portion of each projection line (1008, 1208, 1408) between the mapped points (B) and center of geometry (A) forms a radial line of the geometrical constructs (1010, 1210, 1410); and
cause re-display of the diagram elements (1002, 100, 1202, 1204, 1402, 1404) in accordance with at least mapping of the adjusted mapped points (B) on the connected diagram elements (1002, 1004, 1202, 1204, 1402, 1404) as adjusted connection points.

2. A system as claimed in claim 1, wherein the at least one connector (1006, 1206, 1406) is identified based on characteristics of the connector (1006, 1206, 1406) and positional relationships between the diagram elements (1002,1004,1202,1204,1402, 1404).

3. A system as claimed in claim 1 or claim 2, wherein the at least one identified connector (1206, 1406) is a non-linear connector, wherein optionally the non-linear connector (1206, 1406) is a curved connector.

4. A system as claimed in claim 3, the at least one non-transitory computer readable medium (108) configured to maintain a radius of curvature of the curved connector (1206, 1406) when causing re-display of the diagram elements (1202, 1204, 1402, 1404).

5. A system as claimed in any one of claims 1 to 4, wherein the interactive ink is digital ink.

6. A method for managing connections of diagrams elements (12, 14, 1002, 1004, 1006, 1202, 1204, 1206, 1402, 1404, 1406) on a computing device (100), the computing device (100) comprising a processor (106) and at least one non-transitory computer readable medium (108) for detecting and recognizing hand-drawing diagram element (12, 14, 1002, 1004, 1006, 1202, 1204, 1206, 1402, 1404, 1406) input under control of the processor (106), the method comprising:
displaying a plurality of input diagram elements (12, 14, 1002, 1004, 1006, 1202, 1204, 1206, 1402, 1404, 1406) in interactive ink on a display device (102) associated with the computing device (100);
identifying at least one diagram element as a connector (1006, 1206, 1406) which connects a plurality of diagram elements (1002, 1004, 1202, 1204, 1402, 1404);
determining a geometrical construct (1010, 1210, 1410) of each of the connected diagram elements (1002, 1004, 1202, 1204, 1402, 1404) based on geometrical characteristics of the connected diagram elements (1002, 1004, 1202, 1204, 1402, 1404), wherein the geometrical construct (1010, 1210, 1410) is related to the shape and dimension of the diagram element (1002, 1004, 1202, 1204, 1402, 1404);
mapping points of connection of the at least one identified connector (1006, 1206, 1406) to the connected diagram elements (1002, 1004, 1202, 1204, 1402, 1404) onto the geometrical constructs (1010, 1210, 1410) to define mapped points (B);
adjusting the positions of the mapped points (B) on the geometrical constructs (1010, 1210, 1410) based on one or more interactions received with the interactive ink of the at least one identified connector (1006, 1206, 1406), one or more of the connected diagram elements (1002, 1004, 1202, 1204, 1402, 1404), and projection lines (1008, 1208, 1408) of the connector (1006, 1206, 1406) which project from either end of the connector (1006, 1206, 1406) into the respective connected diagram elements (1002, 1004, 1202, 1204, 1402, 1404) to intersect with the respective center of geometry (A),
wherein the projection lines (1008, 1208, 1408) intersect the mapped points (B) on the geometrical constructs (1010, 1210, 1410) such that the portion of each projection line (1008, 1208, 1408) between the mapped points (B) and the center of geometry (A) forms a radial line of the geometrical constructs (1010, 1210, 1410); and
re-displaying the diagram elements (1002, 100, 1202, 1204, 1402, 1404) in accordance with at least mapping of the adjusted mapped points (B) on the connected diagram elements (1002, 100, 1202, 1204, 1402, 1404) as adjusted connection points.

7. A method as claimed in claim 6, comprising identifying the at least one connector (1006, 1206, 1406) based on characteristics of the connector (1006, 1206, 1406) and positional relationships between the diagram elements (1002, 1004, 1202, 1204, 1402, 1404).

8. A method as claimed in claim 6 or claim 7, wherein the at least one identified connector (1206, 1406) is a non-linear connector, wherein optionally the non-linear connector (1206, 1406) is a curved connector.

9. A method as claimed in claim 8, further comprising maintaining a radius of curvature of the curved connector (1206, 1406) when re-displaying the diagram elements (1202, 1204, 1402, 1404).

10. A method as claimed in any one of claims 6 to 9, wherein the interactive ink is digital ink.

11. A non-transitory computer readable medium (108) having a computer readable program code (110, 112, 114) embodied therein, said computer readable program code (110, 112, 114) adapted to be executed to implement a method for managing connections of diagrams elements (12, 14, 1002, 1004, 1006, 1202, 1204, 1206, 1402, 1404, 1406) on a computing device (100), the computing device (100) comprising a processor (106) and at least one non-transitory computer readable medium (108) for detecting and recognizing hand-drawing diagram element (12, 14, 1002, 1004, 1006, 1202, 1204, 1206, 1402, 1404, 1406) input under control of the processor (106), the method comprising:
displaying a plurality of input diagram elements (1002, 1004, 1006, 1202, 1204, 1206, 1402, 1404, 1406) in interactive ink on a display device (102) associated with the computing device (100);
identifying at least one diagram element as a connector (1006, 1206, 1406) which connects a plurality of diagram elements (1002, 1004, 1202, 1204, 1402, 1404);
determining a geometrical construct (1010, 1210, 1410) of each of the connected diagram elements (1002, 1004, 1202, 1204, 1402, 1404) based on geometrical characteristics of the connected diagram elements (1002, 1004, 1202, 1204, 1402, 1404), wherein the geometrical construct (1010,1210,1410) is related to the shape and dimension of the diagram element (1002, 1004, 1202, 1204, 1402, 1404);
mapping points of connection of the at least one identified connector (1006, 1206, 1406) to the connected diagram elements (1002, 1004, 1202, 1204, 1402, 1404) onto the geometrical constructs (1010, 1210, 1410) to define mapped points (B);
adjusting the positions of the mapped points (B) on the geometrical constructs (1010, 1210, 1410) based on one or more interactions received with the interactive ink of the at least one identified connector (1006, 1206, 1406), one or more of the connected diagram elements (1002, 1004, 1202, 1204, 1402, 1404), and projection lines (1008, 1208, 1408) of the connector (1006, 1206, 1406) which project from either end of the connector (1006, 1206, 1406) into the respective connected diagram elements (1002, 1004, 1202, 1204, 1402, 1404) to intersect with the respective center of geometry (A),
wherein the projection lines (1008, 1208, 1408) intersect the mapped points (B) on the geometrical constructs (1010, 1210, 1410) such that the portion of each projection line (1008, 1208, 1408) between the mapped points (B) and the center of geometry (A) forms a radial line of the geometrical constructs (1010, 1210, 1410); and
re-displaying the diagram elements (1002, 100, 1202, 1204, 1402, 1404) in accordance with at least mapping of the adjusted mapped points (B) on the connected diagram elements (1002, 1004, 1202, 1204, 1402, 1404) as adjusted connection points.

12. A non-transitory computer readable medium (108) as claimed in claim 11, comprising identifying the at least one connector (1006, 1206, 1406) based on characteristics of the connector (1006, 1206, 1406) and positional relationships between the diagram elements (1002, 1004, 1202, 1204, 1402, 1404).

13. A non-transitory computer readable medium (108) as claimed in claim 11 or claim 12, wherein the at least one identified connector (1206, 1406) is a non-linear connector, wherein optionally the non-linear connector (1206, 1406) is a curved connector.

14. A non-transitory computer readable medium (108) as claimed in claim 13, the method further comprising maintaining a radius of curvature of the curved connector (1206, 1406) when re-displaying the diagram elements (1202, 1204, 1402, 1404).

15. A non-transitory computer readable medium (108) as claimed in any one of claims 11 to 14, wherein the interactive ink is digital ink.

## Patentansprüche

1. System zur Verwaltung von Verbindungen von Diagrammelementen (12, 14, 1002, 1004, 1006, 1202, 1204, 1206, 1402, 1404, 1406) an einer Rechenvorrichtung (100), wobei die Rechenvorrichtung (100) einen Prozessor (106) und zumindest ein nichtflüchtiges computerlesbares Medium (108) zum Erfassen und Erkennen von handgezeichneten Diagrammelementen (12, 14, 1002, 1004, 1006, 1202, 1204, 1206, 1402, 1404, 1406) aufweist, die unter der Steuerung des Prozessors (106) eingegeben werden, wobei das zumindest eine nichtflüchtige computerlesbare Medium (108) konfiguriert ist zum:
Veranlassen des Anzeigens einer Vielzahl von eingegebenen Diagrammelementen (1002, 1004, 1006, 1202, 1204, 1206, 1402, 1404, 1406) in interaktiver Tinte auf einer Anzeigevorrichtung (102), die der Rechenvorrichtung (100) zugeordnet ist;
Identifizieren zumindest eines Diagrammelements als einen Verbinder (1006, 1206, 1406), der eine Vielzahl von Diagrammelementen (1002, 1004, 1202, 1204, 1402, 1404) verbindet;
Bestimmen eines geometrischen Konstrukts (1010, 1210, 1410) von jedem der verbundenen Diagrammelemente (1002, 1004, 1202, 1204, 1402, 1404) auf der Grundlage geometrischer Eigenschaften der verbundenen Diagrammelemente (1002, 1004, 1202, 1204, 1402, 1404), wobei das geometrische Konstrukt (1010, 1210, 1410) auf die Form und die Dimension des Diagrammelements (1002, 1004, 1202, 1204, 1402, 1404) bezogen ist;
Abbilden von Punkten der Verbindung des zumindest einen identifizierten Verbinders (1006, 1206, 20 1406) mit den verbundenen Diagrammelementen (1002, 1004, 1202, 1204, 1402, 1404) auf die geometrischen Konstrukte (1010, 1210, 1410), um abgebildete Punkte (B) zu definieren;
Anpassen der Positionen der abgebildeten Punkte (B) auf den geometrischen Konstrukten (1010, 1210, 1410) auf Grundlage einer oder mehrerer Interaktionen, die mit der interaktiven Tinte des zumindest einen identifizierten Verbinders (1006, 1206, 1406) empfangen werden, eines oder mehrerer der verbundenen Diagrammelemente (1002, 1004, 1202, 1204, 1402, 1404) und Projektionslinien (1008, 1208, 1408) des Verbinders (1006, 1206, 1406), die von einem Ende des Verbinders (1006, 1206, 1406) in die jeweiligen verbundenen Diagrammelemente (1002, 1004, 1202, 1204, 1402, 1404) hineinragen, um sich mit dem jeweiligen Mittelpunkt der Geometrie (A) zu schneiden,
wobei die Projektionslinien (1008, 1208, 1408) sich mit den abgebildeten Punkten (B) auf den geometrischen Konstrukten (1010, 1210, 1410) schneiden, so dass der Teil jeder Projektionslinie (1008, 1208, 1408) zwischen den abgebildeten Punkten (B) und dem Mittelpunkt der Geometrie (A) eine radiale Linie der geometrischen Konstrukte (1010, 1210, 1410) bildet; und
Veranlassen des erneuten Anzeigens der Diagrammelemente (1002, 100, 1202, 1204, 1402, 1404) in Übereinstimmung mit zumindest dem Abbilden der angepassten abgebildeten Punkte (B) auf die verbundenen Diagrammelemente (1002, 1004, 1202, 1204, 1402, 1404) als angepasste Verbindungspunkte.

2. System nach Anspruch 1, wobei der zumindest eine Verbinder (1006, 1206, 1406) auf der Grundlage von Eigenschaften des Verbinders (1006, 1206, 1406) und Positionsbeziehungen zwischen den Diagrammelementen (1002, 1004, 1202, 1204, 1402, 1404) identifiziert wird.

3. System nach Anspruch 1 oder Anspruch 2, wobei der zumindest eine identifizierte Verbinder (1206, 1406) ein nicht-linearer Verbinder ist, wobei der nicht-lineare Verbinder (1206, 1406) optional ein gekrümmter Verbinder ist.

4. System nach Anspruch 3, wobei das zumindest eine nichtflüchtige computerlesbare Medium (108) zum Beibehalten eines Krümmungsradius des gekrümmten Verbinders (1206, 1406) konfiguriert ist, wenn das erneute Anzeigen der Diagrammelemente (1202, 1204, 1402, 1404) veranlasst wird.

5. System nach einem der Ansprüche 1 bis 4, wobei die interaktive Tinte digitale Tinte ist.

6. Verfahren zur Verwaltung von Verbindungen von Diagrammelementen (12, 14, 1002, 1004, 1006, 1202, 1204, 1206, 1402, 1404, 1406) an einer Rechenvorrichtung (100), wobei die Rechenvorrichtung (100) einen Prozessor (106) und zumindest ein nichtflüchtiges computerlesbares Medium (108) zum Erfassen und Erkennen von handgezeichneten Diagrammelementen (12, 14, 1002, 1004, 1006, 1202, 1204, 1206, 1402, 1404, 1406) aufweist, die unter der Steuerung des Prozessors (106) eingegeben werden, wobei das Verfahren umfasst:
Anzeigen einer Vielzahl von eingegebenen Diagrammelementen (12, 14, 1002, 1004, 1006, 1202, 1204, 1206, 1402, 1404, 1406) in interaktiver Tinte auf einer Anzeigevorrichtung (102), die der Rechenvorrichtung (100) zugeordnet ist;
Identifizieren zumindest eines Diagrammelements als einen Verbinder (1006, 1206, 1406), der eine Vielzahl von Diagrammelementen (1002, 1004, 1202, 1204, 1402, 1404) verbindet;
Bestimmen eines geometrischen Konstrukts (1010, 1210, 1410) von jedem der verbundenen Diagrammelemente (1002, 1004, 1202, 1204, 1402, 1404) auf der Grundlage geometrischer Eigenschaften der verbundenen Diagrammelemente (1002, 1004, 1202, 1204, 1402, 1404), wobei das geometrische Konstrukt (1010, 1210, 1410) auf die Form und die Dimension des Diagrammelements (1002, 1004, 1202, 1204, 1402, 1404) bezogen ist;
Abbilden von Punkten der Verbindung des zumindest einen identifizierten Verbinders (1006, 1206, 1406) mit den verbundenen Diagrammelementen (1002, 1004, 1202, 1204, 1402, 1404) auf die geometrischen Konstrukte (1010, 1210, 1410), um abgebildete Punkte (B) zu definieren;
Anpassen der Positionen der abgebildeten Punkte (B) auf den geometrischen Konstrukten (1010, 1210, 1410) auf der Grundlage einer oder mehrerer Interaktionen, die mit der interaktiven Tinte des zumindest einen identifizierten Verbinders (1006, 1206, 1406) empfangen werden, eines oder mehrerer der verbundenen Diagrammelemente (1002, 1004, 1202, 1204, 1402, 1404) und Projektionslinien (1008, 1208, 1408) des Verbinders (1006, 1206, 1406), die von einem Ende des Verbinders (1006, 1206, 1406) in die jeweiligen verbundenen Diagrammelemente (1002, 1004, 1202, 1204, 1402, 144) hineinragen, um sich mit dem jeweiligen Mittelpunkt der Geometrie (A) zu schneiden,
wobei die Projektionslinien (1008, 1208, 1408) sich mit den abgebildeten Punkten (B) auf den geometrischen Konstrukten (1010, 1210, 1410) schneiden, so dass der Teil jeder Projektionslinie (1008, 1208, 1408) zwischen den abgebildeten Punkten (B) und dem Mittelpunkt der Geometrie (A) eine radiale Linie der geometrischen Konstrukte (1010, 1210, 1410) bildet; und
erneutes Anzeigen der Diagrammelemente (1002, 100, 1202, 1204, 1402, 1404) in Übereinstimmung mit zumindest dem Abbilden der angepassten abgebildeten Punkte (B) auf die verbundenen Diagrammelemente (1002, 1004, 1202, 1204, 1402, 1404) als angepasste Verbindungspunkte.

7. Verfahren nach Anspruch 6, umfassend das Identifizieren des zumindest einen Verbinders (1006, 1206, 1406) auf der Grundlage von Eigenschaften des Verbinders (1006, 1206, 1406) und Positionsbeziehungen zwischen den Diagrammelementen (1002, 1004, 1202, 1204, 1402, 1404).

8. Verfahren nach Anspruch 6 oder Anspruch 7, wobei der zumindest eine identifizierte Verbinder (1206, 1406) ein nicht-linearer Verbinder ist, wobei der nicht-lineare Verbinder (1206, 1406) optional ein gekrümmter Verbinder ist.

9. Verfahren nach Anspruch 8, ferner umfassend das Beibehalten eines Krümmungsradius des gekrümmten Verbinders (1206, 1406), wenn die Diagrammelemente (1202, 1204, 1402, 1404) erneut angezeigt werden.

10. Verfahren nach einem der Ansprüche 6 bis 9, wobei die interaktive Tinte digitale Tinte ist.

11. Nichtflüchtiges computerlesbares Medium (108), das einen darin ausgestalteten computerlesbaren Programmcode (110, 112, 114) aufweist, wobei der genannte computerlesbare Programmcode (110, 112, 114) zum Ausführen zum Implementieren eines Verfahrens zur Verwaltung von Verbindungen von Diagrammelementen (12, 14, 1002, 1004, 1006, 1202, 1204, 1206, 1402, 1404, 1406) auf einer Rechenvorrichtung (100) angepasst ist, wobei die Rechenvorrichtung (100) einen Prozessor (106) und zumindest ein nichtflüchtiges computerlesbares Medium (108) zum Erfassen und Erkennen von handgezeichneten Diagrammelementen (12, 14, 1002, 1004, 1006, 1202, 1204, 1206, 1402, 1404, 1406) aufweist, die unter der Steuerung des Prozessors (106) eingegeben werden, wobei das Verfahren umfasst:
Anzeigen einer Vielzahl von eingegebenen Diagrammelementen (12, 14, 1002, 1004, 1006, 1202, 1204, 1206, 1402, 1404, 1406) in interaktiver Tinte auf einer Anzeigevorrichtung (102), die der Rechenvorrichtung (100) zugeordnet ist;
Identifizieren zumindest eines Diagrammelements als einen Verbinder (1006, 1206, 1406), der eine Vielzahl von Diagrammelementen (1002, 1004, 1202, 1204, 1402, 1404) verbindet;
Bestimmen eines geometrischen Konstrukts (1010, 1210, 1410) von jedem der verbundenen Diagrammelemente (1002, 1004, 1202, 1204, 1402, 1404) auf der Grundlage geometrischer Eigenschaften der verbundenen Diagrammelemente (1002, 1004, 1202, 1204, 1402, 1404), wobei das geometrische Konstrukt (1010, 1210, 1410) auf die Form und die Dimension des Diagrammelements (1002, 1004, 1202, 1204, 1402, 1404) bezogen ist;
Abbilden von Punkten der Verbindung des zumindest einen identifizierten Verbinders (1006, 1206, 1406) mit den verbundenen Diagrammelementen (1002, 1004, 1202, 1204, 1402, 1404) auf die geometrischen Konstrukte (1010, 1210, 1410), um abgebildete Punkte (B) zu definieren;
Anpassen der Positionen der abgebildeten Punkte (B) auf den geometrischen Konstrukten (1010, 1210, 1410) auf der Grundlage einer oder mehrerer Interaktionen, die mit der interaktiven Tinte des zumindest einen identifizierten Verbinders (1006, 1206, 1406) empfangen werden, eines oder mehrerer der verbundenen Diagrammelemente (1002, 1004, 1202, 1204, 1402, 1404) und Projektionslinien (1008, 1208, 1408) des Verbinders (1006, 1206, 1406), die von einem Ende des Verbinders (1006, 1206, 1406) in die jeweiligen verbundenen Diagrammelemente (1002, 1004, 1202, 1204, 1402, 144) hineinragen, um sich mit dem jeweiligen Mittelpunkt der Geometrie (A) zu schneiden,
wobei die Projektionslinien (1008, 1208, 1408) sich mit den abgebildeten Punkten (B) auf den geometrischen Konstrukten (1010, 1210, 1410) schneiden, so dass der Teil jeder Projektionslinie (1008, 1208, 1408) zwischen den abgebildeten Punkten (B) und dem Mittelpunkt der Geometrie (A) eine radiale Linie der geometrischen Konstrukte (1010, 1210, 1410) bildet; und
erneutes Anzeigen der Diagrammelemente (1002, 100, 1202, 1204, 1402, 1404) in Übereinstimmung mit zumindest dem Abbilden der angepassten abgebildeten Punkte (B) auf die verbundenen Diagrammelemente (1002, 1004, 1202, 1204, 1402, 1404) als angepasste Verbindungspunkte.

12. Nichtflüchtiges computerlesbares Medium (108) nach Anspruch 11, umfassend das Identifizieren des zumindest einen Verbinders (1006, 1206, 1406) auf der Grundlage von Eigenschaften des Verbinders (1006, 1206, 1406) und Positionsbeziehungen zwischen den Diagrammelementen (1002, 1004, 1202, 1204, 1402, 1404).

13. Nichtflüchtiges computerlesbares Medium (108) nach Anspruch 11 oder Anspruch 12, wobei der zumindest eine identifizierte Verbinder (1206, 1406) ein nicht-linearer Verbinder ist, wobei der nicht-lineare Verbinder (1206, 1406) optional ein gekrümmter Verbinder ist.

14. Nichtflüchtiges computerlesbares Medium (108) nach Anspruch 13, wobei das Verfahren ferner das Beibehalten eines Krümmungsradius des gekrümmten Verbinders (1206, 1406) umfasst, wenn die Diagrammelemente (1202, 1204, 1402, 1404) erneut angezeigt werden.

15. Nichtflüchtiges computerlesbares Medium (108) nach einem der Ansprüche 11 bis 14, wobei die interaktive Tinte digitale Tinte ist.

## Revendications

1. Système de gestion de connexions d'éléments de diagrammes (12, 14, 1002, 1004, 1006, 1202, 1204, 1206, 1402, 1404, 1406) sur un dispositif informatique (100), le dispositif informatique (100) comprenant un processeur (106) et au moins un support lisible par ordinateur non transitoire (108) pour détecter et reconnaître des éléments de diagramme dessinés à la main (12, 14, 1002, 1004, 1006, 1202, 1204, 1206, 1402, 1404, 1406) entrés sous la commande du processeur (106), l'au moins un support lisible par ordinateur non transitoire (108) étant configuré pour :
déclencher l'affichage d'une pluralité d'éléments de diagramme entrés (1002, 1004, 1006, 1202, 1204, 1206, 1402, 1404, 1406) en encre interactive sur un dispositif d'affichage (102) associé au dispositif informatique (100) ;
identifier au moins un élément de diagramme en tant qu'un connecteur (1006, 1206, 1406), lequel connecte une pluralité d'éléments de diagramme (1002, 1004, 1202, 1204, 1402, 1404) ;
déterminer une structure géométrique (1010, 1210, 1410) de chacun des éléments de diagramme connectés (1002, 1004, 1202, 1204, 1402, 1404) sur la base de caractéristiques géométriques des éléments de diagramme connectés (1002, 1004, 1202, 1204, 1402, 1404), dans lequel la structure géométrique (1010, 1210, 1410) est associée à la forme et à la dimension de l'élément de diagramme (1002, 1004, 1202, 1204, 1402, 1404) ;
mapper des points de connexion de l'au moins un connecteur (1006, 1206, 1406) identifié aux éléments de diagramme connectés (1002, 1004, 1202, 1204, 1402, 1404) sur les structures géométriques (1010, 1210, 1410) pour définir des points mappés (B) ;
ajuster les positions des points mappés (B) sur les structures géométriques (1010, 1210, 140) sur la base des une ou plusieurs interactions reçues avec l'encre interactive de l'au moins un connecteur (1006, 1206, 1406) identifié, des un ou plusieurs des éléments de diagramme connectés (1002, 1004, 1202, 1204, 1402, 1404) et de lignes de projection (1008, 1208, 1408) du connecteur (1006, 1206, 1406) qui se projettent depuis une extrémité du connecteur (1006, 1206, 1406) dans les éléments de diagramme connectés (1002, 1004, 1202, 1204, 1402, 1404) respectifs pour interagir avec le centre de géométrie (A) respectif,
dans lequel les lignes de projection (1008, 1208, 1408) entrecroisent les points mappés (B) sur les structures géométriques (1010, 1210, 1410) de telle sorte que la partie de chaque ligne de projection (1008, 1208, 1408) entre les points mappés (B) et le centre de géométrie (A) forme une ligne radiale des structures géométriques (1010, 1210, 1410) ; et
déclencher le réaffichage des éléments de diagramme (1002, 1004, 1202, 1204, 1402, 1404) conformément au moins au mappage des points mappés ajustés (B) sur les éléments de diagramme connectés (1002, 1004, 1202, 1204, 1402, 1404) en tant que points de connexion ajustés.

2. Système selon la revendication 1, dans lequel l'au moins un connecteur (1006, 1206, 1406) est identifié sur la base de caractéristiques du connecteur (1006, 1206, 1406) et des relations de position entre les éléments de diagramme (1002, 1004, 1202, 1204, 1402, 1404).

3. Système selon la revendication 1 ou la revendication 2, dans lequel l'au moins un connecteur (1206, 1406) identifié est un connecteur non linéaire, dans lequel en option le connecteur non linéaire (1206, 1406) est un connecteur incurvé.

4. Système selon la revendication 3, dans lequel l'au moins un support lisible par ordinateur non transitoire (108) est configuré pour maintenir un rayon de courbure du connecteur (1206, 1406) incurvé lors du déclenchement du réaffichage des éléments de diagramme (1202, 1204, 1402, 1404).

5. Système selon l'une quelconque des revendications 1 à 4, dans lequel l'encre interactive est de l'encre numérique.

6. Procédé de gestion de connexions d'éléments de diagrammes (12, 14, 1002, 1004, 1006, 1202, 1204, 1206, 1402, 1404, 1406) sur un dispositif informatique (100), le dispositif informatique (100) comprenant un processeur (106) et au moins un support lisible par ordinateur non transitoire (108) pour détecter et reconnaître un élément de diagramme dessiné à la main (12, 14, 1002, 1004, 1006, 1202, 1204, 1206, 1402, 1404, 1406) entré sous la commande du processeur (106), le procédé comprenant :
l'affichage d'une pluralité d'éléments de diagramme entrés (12, 14, 1002, 1004, 1006, 1202, 1204, 1206, 1402, 1404, 1406) en encre interactive sur un dispositif d'affichage (102) associé au dispositif informatique (100) ;
l'identification d'au moins un élément de diagramme en tant qu'un connecteur (1006, 1206, 1406) qui connecte une pluralité d'éléments de diagramme (1002, 1004, 1202, 1204, 1402, 1404) ;
déterminer une structure géométrique (1010, 1210, 1410) pour chacun des éléments de diagramme connectés (1002, 1004, 1202, 1204, 1402, 1404) sur la base de caractéristiques géométriques des éléments de diagramme connectés (1002, 1004, 1202, 1204, 1402, 1404), dans lequel la structure géométrique (1010, 1210, 1410) concerne la forme et la dimension de l'élément de diagramme (1002, 1004, 1202, 1204, 1402, 1404) ;
le mappage de points de connexion de l'au moins un connecteur identifié (1006, 1206, 1406) aux éléments de diagramme connectés (1002, 1004, 1202, 1204, 1402, 1404) sur les structures géométriques (1010, 1210, 1410) pour définir des points mappés (B) ;
l'ajustement des positions des points mappés (B) sur les structures géométriques (1010, 1210, 1410) sur la base des une ou plusieurs interactions reçues avec l'encre interactive de l'au moins un connecteur identifié (1006, 1206, 1406), d'un ou de plusieurs des éléments de diagramme connectés (1002, 1004, 1202, 1204, 1402, 1404), et de lignes de projection (1008, 1208, 1408) du connecteur (1006, 1206, 1406) qui se projettent depuis une extrémité du connecteur (1006, 1206, 1406) dans les éléments de diagramme connectés (1002, 1004, 1202, 1204, 1402, 1404) respectifs pour entrecroiser le centre de géométrie (A) respectif,
dans lequel les lignes de projection (1008, 1208, 1408) entrecroisent les points mappés (B) sur les structures géométriques (1010, 1210, 140) de telle sorte que la partie de chaque ligne de projection (1008, 1208, 1408) entre les points mappés (B) et le centre de géométrie (A) forme une ligne radiale des structures géométriques (1010, 1210, 1410) ; et
le réaffichage des éléments de diagramme (1002, 1004, 1202, 1204, 1402, 1404) conformément au moins au mappage des points mappés (B) ajustés sur les éléments de diagramme connectés (1002, 1004, 1202, 1204, 1402, 1404) en tant que points de connexion ajustés.

7. Procédé selon la revendication 6, comprenant l'identification de l'au moins un connecteur (1006, 1206, 1406) sur la base de caractéristiques du connecteur (1006, 1206, 1406) et de relations de position entre les éléments de diagramme (1002, 1004, 1202, 1204, 1402, 1404).

8. Procédé selon la revendication 6 ou la revendication 7, dans lequel l'au moins un connecteur identifié (1206, 1406) est un connecteur non linéaire, dans lequel en option le connecteur non linéaire (1206, 1406) est un connecteur incurvé.

9. Procédé selon la revendication 8, comprenant en outre le maintien d'un rayon de courbure du connecteur incurvé (1206, 1406) lors du réaffichage des éléments de diagramme (1202, 1204, 1402, 1404).

10. Procédé selon l'une quelconque des revendications 6 à 9, dans lequel l'encre interactive est une encre numérique.

11. Support lisible par ordinateur non transitoire (108) présentant un code de programme lisible par ordinateur (110, 112, 114) intégré dans celui-ci, ledit code de programme lisible par ordinateur (110, 112, 114) étant adapté pour être exécuté pour mettre en oeuvre un procédé de gestion de connexion d'éléments de diagrammes (12, 14, 1002, 1004, 1006, 1202, 1204, 1206, 1402, 1404, 1406) sur un dispositif informatique (100), le dispositif informatique (100) comprenant un processeur (106) et au moins un support lisible par ordinateur non transitoire (108) de détection et de reconnaissance d'élément de diagramme dessiné à la main (12, 14, 1002, 1004, 1006, 1202, 1204, 1206, 1402, 1404, 1406) entré sous la commande du processeur (106), le procédé comprenant :
l'affichage d'une pluralité d'éléments de diagramme entrés (1002, 1004, 1006, 1202, 1204, 1206, 1402, 1404, 1406) en encre interactive sur un dispositif d'affichage (102) associé au dispositif informatique (100) ;
l'identification d'au moins un élément de diagramme en tant qu'un connecteur (1006, 1206, 1406), qui connecte une pluralité d'éléments de diagramme (1002, 1004, 1202, 1204, 1402, 1404) ;
la détermination d'une structure géométrique (1010, 1210, 1410) de chacun des éléments de diagramme connectés (1002, 1004, 1202, 1204, 1402, 1404) sur la base de caractéristiques géométriques des éléments de diagramme connectés (1002, 1004, 1202, 1204, 1402, 1404), dans lequel la structure géométrique (1010, 1210, 1410) concerne la forme et la dimension de l'élément de diagramme (1002, 1004, 1202, 1204, 1402, 1404) ;
le mappage de points de connexion de l'au moins un connecteur identifié (1006, 1206, 1406) aux éléments de diagramme connectés (1002, 1004, 1202, 1204, 1402, 1404) sur les structures géométriques (1010, 1210, 1410) pour définir des points mappés (B) ;
l'ajustement des positions des points mappés (B) sur les structures géométriques (1010, 1210, 1410) sur la base des une ou plusieurs interactions reçues avec l'encre interactive de l'au moins un connecteur identifié (1006, 1206, 1406), d'un ou plusieurs des éléments de diagramme connectés (1002, 1004, 1202, 1204, 1402, 1404), et de lignes de projection (1008, 1208, 1408) du connecteur (1006, 1206, 1406) qui se projettent depuis une extrémité du connecteur (1006, 1206, 1406) dans les éléments de diagramme connectés (1002, 1004, 1202, 1204, 1402, 1404) respectifs pour entrecroiser le centre de géométrie (A) respectif,
dans lequel les lignes de projection (1008, 1208, 1408) entrecroisent les points mappés (B) sur les structures géométriques (1010, 1210, 1410) de telle sorte que la partie de chaque ligne de projection (1008, 1208, 1408) entre les points mappés (B) et le centre de géométrie (A) forme une ligne radiale des structures géométriques (1010, 1210, 1410) ; et
le réaffichage des éléments de diagramme (1002, 1004, 1202, 1204, 1402, 1404) conformément au moins au mappage des points mappés ajustés (B) sur les éléments de diagramme connectés (1002, 1004, 1202, 1204, 1402, 1404) en tant que points de connexion ajustés.

12. Support lisible par ordinateur non transitoire (108) selon la revendication 11, comprenant l'identification de l'au moins un connecteur (1006, 1206, 1406) sur la base de caractéristiques du connecteur (1006, 1206, 1406) et de relations de position entre les éléments de diagramme (1002, 1004, 1202, 1204, 1402, 1404).

13. Support lisible par ordinateur non transitoire (108) selon la revendication 11 ou la revendication 12, dans lequel l'au moins un connecteur identifié (1206, 1406) est un connecteur non linéaire, dans lequel en option le connecteur non linéaire (1206, 1406) est un connecteur incurvé.

14. Support lisible par ordinateur (108) selon la revendication 13, le procédé comprenant en outre le maintien d'un rayon de courbure du connecteur incurvé (1206, 1406) lors du réaffichage des éléments de diagramme (1202, 1204, 1402, 1404).

15. Support lisible par ordinateur non transitoire (108) selon l'une quelconque des revendications 11 à 14, dans lequel l'encre interactive est de l'encre numérique.
